(19) Europäisches Patentamt
European Patent Office
Office européen des brevets

(11) **EP 4 561 151 A1**

(12) **EUROPEAN PATENT APPLICATION**
published in accordance with Art. 153(4) EPC

(43) Date of publication:
**28.05.2025 Bulletin 2025/22**

(21) Application number: **23851638.9**

(22) Date of filing: **31.07.2023**

(51) International Patent Classification (IPC):
*H04W 24/02* (2009.01)

(52) Cooperative Patent Classification (CPC):
**H04L 5/00; H04W 24/02**

(86) International application number:
**PCT/CN2023/110375**

(87) International publication number:
**WO 2024/032417 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.08.2022 CN 202210968766**

(71) Applicant: **Huawei Technologies Co., Ltd.**
**Shenzhen, Guangdong 518129 (CN)**

(72) Inventors:
• **LIU, Xiaoqing**
  **Shenzhen, Guangdong 518129 (CN)**
• **LIU, Jianghua**
  **Shenzhen, Guangdong 518129 (CN)**
• **YU, Zheng**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **REFERENCE SIGNAL TRANSMISSION METHOD AND COMMUNICATION APPARATUS**

(57)     A reference signal transmission method and a communication apparatus are disclosed, applied to the field of wireless communication technologies, to reduce interference between reference signals and improve scheduling flexibility. The method may include: receiving configuration information, where the configuration information includes a first configuration parameter; determining, based on the first configuration parameter, to use a first hopping mode; and sending a reference signal in the first hopping mode, where the first hopping mode is one or more of the following: group hopping, sequence hopping, cyclic shift hopping, frequency hopping, and time hopping. The interference between reference signals can be reduced in the first hopping mode, and the scheduling flexibility can be improved by determining, based on the first configuration parameter, to use the first hopping mode.

FIG. 3

## Description

This application claims priority to Chinese Patent Application No. 202210968766.3, filed with the China National Intellectual Property Administration on August 12, 2022 and entitled "REFERENCE SIGNAL TRANSMISSION METHOD AND COMMUNICATION APPARATUS", which is incorporated herein by reference in its entirety.

## TECHNICAL FIELD

This application relates to the field of communication technologies, and in particular, to a reference signal transmission method and a communication apparatus.

## BACKGROUND

A reference signal is a known signal provided by a transmitter to a receiver for estimating or detecting radio channel information. The reference signal may be classified into an uplink reference signal and a downlink reference signal. Downlink channel information may be obtained through measurement on the downlink reference signal by UE, and then the channel information obtained through measurement is reported to a network device, so that the network device sets an appropriate sending parameter for subsequent downlink transmission based on the channel information. Downlink channel information of a time division duplex (time division duplex, TDD) system may alternatively be obtained based on channel reciprocity, that is, it is considered that an uplink channel and a downlink channel have some same channel features. The network may obtain uplink channel information through measurement on the uplink reference signal, and further obtain related downlink channel information through estimation.

New radio (new radio, NR) introduces a multi-transmission and reception point (transmission and reception point, TRP) transmission technology. Specifically, a plurality of TRPs may simultaneously provide a data transmission service for same user equipment (user equipment, UE). The multi-TRP transmission technology may be classified into a coherent joint transmission (coherent joint transmission, CJT) technology and a non-coherent joint transmission (Non-coherent joint transmission, NCJT) technology.

In a joint transmission scenario like CJT, because UEs are deployed more densely, interference between reference signals in coverages of different TRPs is strong. Therefore, how to reduce interference between reference signals is an urgent technical problem to be resolved.

## SUMMARY

Embodiments of this application provide a reference signal transmission method and a communication apparatus, to reduce interference between reference signals and improve scheduling flexibility.

According to a first aspect, this application provides a reference signal transmission method. The method may include: receiving configuration information, where the configuration information includes a first configuration parameter; determining, based on the first configuration parameter, to use a first hopping mode; and sending a reference signal in the first hopping mode, where the first hopping mode is one or more of the following: group hopping, sequence hopping, cyclic shift hopping, frequency hopping, and time hopping.

The group hopping, the sequence hopping, the cyclic shift hopping, the frequency hopping, or the time hopping can reduce interference between reference signals. Therefore, the first hopping mode is determined based on the first configuration parameter, so that the interference between reference signals can be reduced, and scheduling flexibility can be improved.

In a possible implementation, when determining, based on the first configuration parameter, to use a first hopping mode includes: determining, based on a value of the first configuration parameter, to use the first hopping mode. It may be understood that different values of the first configuration parameter indicate to use different first hopping modes, so that the interference between reference signals may be reduced in the corresponding first hopping mode based on the value of the first configuration parameter.

In another possible implementation, when determining, based on the first configuration parameter, to use the first hopping mode, if a value of the first configuration parameter is a first value, it is determined to use the first hopping mode, where the first hopping mode is one or more of the following: the cyclic shift hopping, the frequency hopping, and the time hopping; or if a value of the first configuration parameter is a second value, it is determined to use the first hopping mode, where the first hopping mode is the group hopping and/or the sequence hopping. It can be learned that two different values of the first configuration parameter respectively indicate hopping modes of different type sets, so that signaling overheads can be reduced.

In a possible implementation, the first hopping mode is specifically one or more of the following: the cyclic shift hopping, the frequency hopping, and the time hopping; and if the configuration information further includes a second configuration parameter, it may be determined, based on a value of the second configuration parameter, to use a second hopping mode, where the second hopping mode is the group hopping and/or the sequence hopping. It can be learned that the configuration information includes two configuration parameters to respectively indicate to use the hopping modes of different type sets. The first configuration parameter indicates to use one or more of the cyclic shift hopping, the frequency hopping, or the time hopping; and the second configuration parameter indicates to use the group hopping and/or the sequence hopping, to distinguish the hopping modes of different type sets, so as to improve scheduling flexibility.

Further, if the configuration information further includes the second configuration parameter, when the reference signal is sent, the reference signal may be sent in the first hopping mode and the second hopping mode. In other words, the reference signal may be sent in both the first hopping mode and the second hopping mode, to further reduce the interference between reference signals.

In a possible implementation, the configuration information further includes a first initial value parameter and a second initial value parameter; the first initial value parameter is used in the first hopping mode, and the first hopping mode is one or more of the following: the cyclic shift hopping, the frequency hopping, and the time hopping; the second initial value parameter is used in a second hopping mode, and the second hopping mode is the group hopping and/or the sequence hopping; and the first initial value parameter is different from the second initial value parameter. In other words, the configuration information further includes an initial value parameter used in the first hopping mode and an initial value parameter used in the second hopping mode, and the hopping modes of different type sets correspond to different initial value parameters, to improve scheduling flexibility.

Further, the first initial value parameter is associated with a coordinated set identifier, the coordinated set identifier is associated with one or more downlink reference signal resources, and the coordinated set identifier is used to identify a coordinated set. For example, the coordinated set identifier is associated with one or more channel state information-reference signal (channel state information-reference signal, CSI-RS) resources, or the coordinated set is associated with one or more CSI-RSs. For another example, the coordinated set identifier is associated with one or more path loss reference signal resources. The first initial value is associated with the protocol set identifier, to further improve scheduling flexibility.

The coordinated set identifier may be configured, predefined, indicated by dynamic signaling, or reported by the terminal device.

Further, if the first initial value parameter is known, the initial value of the first hopping mode is determined based on the first initial value parameter; the hopping parameter of the first hopping mode is determined based on the initial value of the first hopping mode; and the reference signal is sent based on the hopping parameter of the first hopping mode, to reduce interference with a reference signal sent by another terminal device.

In another possible implementation, when the first hopping mode is one or more of the following: the cyclic shift hopping, the frequency hopping, and the time hopping, and the configuration information does not include a first initial value parameter, but further includes a second initial value parameter, the first initial value parameter is used in the first hopping mode, the second initial value parameter is used in a second hopping mode and/or the first hopping mode, and the second hopping mode is the group hopping and/or the sequence hopping. In other words, if an initial value parameter is not configured for the first hopping mode, the initial value parameter corresponding to the first hopping mode may be the second initial value parameter, to save signaling.

Further, if the second initial value parameter is known, the initial value of the first hopping mode is determined based on the second initial value parameter; the hopping parameter of the first hopping mode is determined based on the initial value of the first hopping mode; and the reference signal is sent based on the hopping parameter of the first hopping mode, to reduce interference with a reference signal sent by another terminal device.

In a possible implementation, the method further includes: generating the initial value parameter of the first hopping mode; and when sending the reference signal in the first hopping mode, determining the hopping parameter of the first hopping mode based on the initial value parameter of the first hopping mode, and sending the reference signal based on the hopping parameter of the first hopping mode. When the initial value parameter is not configured for the first hopping mode, the initial value parameter of the first hopping mode may be automatically generated, to reduce implementation complexity.

In a possible implementation, the method further includes: determining a first hopping parameter based on the first configuration parameter, where the first hopping parameter is one or more of the following: a group hopping parameter, a sequence hopping parameter, a cyclic shift hopping parameter, a frequency hopping parameter, and a time hopping parameter; and when sending the reference signal in the first hopping mode, sending the reference signal in the first hopping mode based on the first hopping parameter. In other words, there is a correspondence between the first configuration parameter and the first hopping parameter, so that the reference signal is sent based on the first hopping parameter, to reduce signaling overheads.

Further, when the first hopping parameter is determined based on the first configuration parameter, it is determined, based on the value of the first configuration parameter, that the hopping parameter is the first hopping parameter.

Further, the first hopping parameter is one or more of the following: the cyclic shift hopping parameter, the frequency hopping parameter, and the time hopping parameter; the configuration information further includes the second configuration parameter; further, a second hopping parameter is determined based on the second configuration parameter, where the second hopping parameter is the group hopping parameter and/or the sequence hopping parameter; and the reference signal is sent based on the first hopping parameter and the second hopping parameter. It can be learned that the configuration information includes two configuration parameters to respectively indicate hopping parameters of different type sets. The first configuration parameter indicates one or more of the cyclic shift hopping parameter, the frequency hopping parameter, and the time hopping parameter; and the second configuration parameter indicates the group hopping parameter and/or the sequence hopping parameter, to distinguish hopping parameters of different types, so as to improve scheduling flexibility.

In a possible implementation, the method further includes: determining a first hopping parameter based on the first configuration parameter and a first formula, where the first hopping parameter is one or more of the following: a group hopping parameter, a sequence hopping parameter, a cyclic shift hopping parameter, a frequency hopping parameter, and a time hopping parameter; and when sending the reference signal in the first hopping mode, sending the reference signal in the first hopping mode based on the first hopping parameter.

According to a second aspect, this application provides another reference signal transmission method. The method may include: receiving configuration information; and if the configuration information includes a first configuration parameter, determining to use a first hopping mode, and sending a reference signal in the first hopping mode; and/or if the configuration information does not include the first configuration parameter, determining not to use the first hopping mode, where the first hopping mode is one or more of the following: group hopping, sequence hopping, cyclic shift hopping, frequency hopping, and time hopping.

It can be learned that, whether to use the first hopping mode is determined based on whether the configuration information includes the first configuration parameter, so that signaling overheads can be reduced. If the first hopping mode is used, interference between reference signals can be reduced, and scheduling flexibility can be improved. If the first hopping mode is not used, implementation complexity can be reduced.

In a possible implementation, if the configuration information includes the first configuration parameter, it is determined, based on the first configuration parameter, to use the first hopping mode.

Optionally, it may be determined, based on a value of the first configuration parameter, that hopping mode is the first hopping mode, and it is determined to use the first hopping mode. It may be understood that different values of the first configuration parameter indicate different hopping modes, so that the first hopping mode may be determined based on the value of the first configuration parameter, to use the first hopping mode to reduce the interference between reference signals.

Optionally, if the value of the first configuration parameter is a first value, it is determined to use the first hopping mode, where the first hopping mode is one or more of the following: the cyclic shift hopping, the frequency hopping, and the time hopping; or if the value of the first configuration parameter is a second value, it is determined to use the first hopping mode, where the first hopping mode is the group hopping and/or the sequence hopping. It can be learned that two different values of the first configuration parameter respectively indicate hopping modes of different type sets, so that signaling overheads can be reduced.

In another possible implementation, the first hopping mode is specifically one or more of the following: the cyclic shift hopping, the frequency hopping, or the time hopping. If the configuration information includes the first configuration parameter and a second configuration parameter, it may be further determined, based on a value of the second configuration parameter, to use a second hopping mode, where the second hopping mode is the group hopping and/or the sequence hopping. It can be learned that the configuration information includes two configuration parameters to respectively indicate hopping modes of different type sets. The first configuration parameter indicates one or more of the cyclic shift hopping, the frequency hopping, and the time hopping; and the second configuration parameter indicates the group hopping and/or the sequence hopping, to distinguish hopping modes of different type sets, so as to improve scheduling flexibility.

Further, if the configuration information further includes the second configuration parameter, when the reference signal is sent, the reference signal may be sent in the first hopping mode and the second hopping mode. In other words, the reference signal may be sent in both the first hopping mode and the second hopping mode, to further reduce the interference between reference signals.

In a possible implementation, if the configuration information includes the first configuration parameter, the configuration information further includes a first initial value parameter and a second initial value parameter; the first initial value parameter is used in the first hopping mode, and the first hopping mode is one or more of the following: the cyclic shift hopping, the frequency hopping, and the time hopping; the second initial value parameter is used in the second hopping mode, and the second hopping mode is the group hopping and/or the sequence hopping; and the first initial value parameter is different from the second initial value parameter. In other words, the configuration information further includes an initial value parameter used in the first hopping mode and an initial value parameter used in the second hopping mode, and the hopping modes of different type sets correspond to different initial value parameters, to improve scheduling flexibility.

Further, the first initial value parameter is associated with a coordinated set identifier, the coordinated set identifier is used to identify a coordinated set, and the coordinated set identifier is associated with one or more downlink reference signal resources. The first initial value is associated with the protocol set identifier, to further improve scheduling flexibility. The coordinated set identifier may be configured, predefined, indicated by dynamic signaling, or reported by the terminal device.

Further, if the first initial value parameter is known, the initial value of the first hopping mode is determined based on the first initial value parameter; the hopping parameter of the first hopping mode is determined based on the initial value of the first hopping mode; and the reference signal is sent based on the hopping parameter of the first hopping mode, to reduce interference with a reference signal sent by another terminal device.

In another possible implementation, if the configuration information includes the first configuration parameter, the first hopping mode is one or more of the following: the cyclic shift hopping, the frequency hopping, and the time hopping, and the configuration information does not include a first initial value parameter, but further includes a second initial value parameter, the first initial value parameter is used in the first hopping mode, the second initial value parameter is used in the second hopping mode and/or the first hopping mode, and the second hopping mode is the group hopping and/or the sequence hopping. In other words, if an initial value parameter is not configured for the first hopping mode, the initial value parameter corresponding to the first hopping mode may be the second initial value parameter, to save signaling.

Further, if the second initial value parameter is known, the initial value of the first hopping mode is determined based on the second initial value parameter; the hopping parameter of the first hopping mode is determined based on the initial value of the first hopping mode; and the reference signal is sent based on the hopping parameter of the first hopping mode, to reduce interference with a reference signal sent by another terminal device.

In a possible implementation, the method further includes: generating the initial value parameter of the first hopping mode; and when sending the reference signal in the first hopping mode, determining the hopping parameter of the first hopping mode based on the initial value parameter of the first hopping mode, and sending the reference signal based on the hopping parameter of the first hopping mode. When the initial value parameter is not configured for the first hopping mode, the initial value parameter of the first hopping mode may be automatically generated, to reduce implementation complexity.

In a possible implementation, if the configuration information includes the first configuration parameter, the method further includes: determining a first hopping parameter based on the first configuration parameter, where the first hopping parameter is one or more of the following: a group hopping parameter, a sequence hopping parameter, a cyclic shift hopping parameter, a frequency hopping parameter, and a time hopping parameter; and when sending the reference signal in the first hopping mode, sending the reference signal in the first hopping mode based on the first hopping parameter. In other words, there is a correspondence between the first configuration parameter and the first hopping parameter, so that the reference signal is sent based on the first hopping parameter, to reduce signaling overheads.

Further, when the first hopping parameter is determined based on the first configuration parameter, it is determined, based on the value of the first configuration parameter, that the hopping parameter is the first hopping parameter.

Further, the first hopping parameter is one or more of the following: the cyclic shift hopping parameter, the frequency hopping parameter, and the time hopping parameter; the configuration information further includes the second configuration parameter; further, a second hopping parameter is determined based on the second configuration parameter, where the second hopping parameter is the group hopping parameter and/or the sequence hopping parameter; and the reference signal is sent based on the first hopping parameter and the second hopping parameter. It can be learned that the configuration information includes two configuration parameters to respectively indicate hopping parameters of different type sets. The first configuration parameter indicates one or more of the cyclic shift hopping parameter, the frequency hopping parameter, and the time hopping parameter; and the second configuration parameter indicates the group hopping parameter and/or the sequence hopping parameter, to distinguish hopping parameters of different type sets, so as to improve scheduling flexibility.

In another possible implementation, if the configuration information includes the first configuration parameter, a first hopping parameter is determined according to a first formula, and further, the reference signal is sent in the first hopping mode based on the first hopping parameter; and/or

if the configuration information does not include the second configuration parameter, the hopping parameter is determined according to a second formula, and the reference signal is sent based on the hopping parameter.

According to a third aspect, this application provides another reference signal transmission method. The method may include: receiving configuration information; and if the configuration information includes a first configuration parameter, determining to use a first hopping mode, and sending a reference signal in the first hopping mode, where the first hopping mode is one or more of the following: cyclic shift hopping, frequency hopping, and time hopping; and/or if the configuration information does not include the first configuration parameter, determining to use a second hopping mode, where the second hopping mode is group hopping and/or sequence hopping.

It can be learned that, whether to use the first hopping mode or the second hopping mode is determined based on whether the configuration information includes the first configuration parameter, so that signaling overheads can be reduced. If the first hopping mode or the second hopping mode is used, interference between reference signals can be reduced, and scheduling flexibility can be improved.

In a possible implementation, if the configuration information includes the first configuration parameter, it is determined, based on the first configuration parameter, to use the first hopping mode.

Optionally, it may be determined, based on a value of the first configuration parameter, to use the first hopping mode. It may be understood that different values of the first configuration parameter indicate to use different first hopping modes, so that the interference between reference signals may be reduced in the first hopping mode based on the value of the first configuration parameter.

In a possible implementation, if the configuration information includes the first configuration parameter, the configuration information further includes a first initial value parameter and a second initial value parameter; the first initial value parameter is used in the first hopping mode, and the second initial value parameter is used in the second hopping mode; and the first initial value parameter is different from the second initial value parameter. In other words, the configuration information further includes an initial value parameter used in the first hopping mode and an initial value parameter used in the second hopping mode, and the hopping modes of different type sets correspond to different initial value parameters, to improve scheduling flexibility.

Further, the first initial value parameter is associated with a coordinated set identifier, the coordinated set identifier is used to identify a coordinated set, and the coordinated set identifier is associated with one or more downlink reference signal resources. The first initial value is associated with the protocol set identifier, to further improve scheduling flexibility. The coordinated set identifier may be configured, predefined, indicated by dynamic signaling, or reported by the terminal device.

Further, if the first initial value parameter is known, the initial value of the first hopping mode is determined based on the first initial value parameter; the hopping parameter of the first hopping mode is determined based on the initial value of the first hopping mode; and the reference signal is sent based on the hopping parameter of the first hopping mode, to reduce interference with a reference signal sent by another terminal device.

In another possible implementation, if the configuration information includes the first configuration parameter, and the configuration information does not include a first initial value parameter, but further includes a second initial value parameter, the first initial value parameter is used in the first hopping mode, and the second initial value parameter is used in the second hopping mode and the first hopping mode. In other words, if an initial value parameter is not configured for the first hopping mode, the initial value parameter corresponding to the first hopping mode may be the second initial value parameter, to save signaling.

Further, if the second initial value parameter is known, the initial value of the first hopping mode is determined based on the second initial value parameter; the hopping parameter of the first hopping mode is determined based on the initial value of the first hopping mode; and the reference signal is sent based on the hopping parameter of the first hopping mode, to reduce interference with a reference signal sent by another terminal device.

In a possible implementation, the method further includes: generating the initial value parameter of the first hopping mode; and when sending the reference signal in the first hopping mode, determining the hopping parameter of the first hopping mode based on the initial value parameter of the first hopping mode, and sending the reference signal based on the hopping parameter of the first hopping mode. When the initial value parameter is not configured for the first hopping mode, the initial value parameter of the first hopping mode may be automatically generated, to reduce implementation complexity.

In a possible implementation, if the configuration information includes the first configuration parameter, the method further includes: determining a first hopping parameter based on the first configuration parameter, where the first hopping parameter is one or more of the following: a cyclic shift hopping parameter, a frequency hopping parameter, and a time hopping parameter; and when sending the reference signal in the first hopping mode, sending the reference signal in the first hopping mode based on the first hopping parameter. In other words, there is a correspondence between the first configuration parameter and the first hopping parameter, so that the reference signal is sent based on the first hopping parameter, to reduce signaling overheads.

Further, when the first hopping parameter is determined based on the first configuration parameter, it is determined, based on the value of the first configuration parameter, that the hopping parameter is the first hopping parameter.

In a possible implementation, if the configuration information does not include the first configuration parameter, but includes a second configuration parameter, a second hopping parameter is determined based on the second configuration parameter, where the second hopping parameter is a group hopping parameter and/or a sequence hopping parameter; and further, when the reference signal is sent in the second hopping mode, the reference signal is sent in the second hopping mode based on the second hopping parameter.

In a possible implementation, if the configuration information includes the first configuration parameter, the first hopping parameter is determined according to a third formula, where the first hopping parameter is used in the first hopping mode; and/or if the configuration information does not include the first configuration parameter, the second hopping parameter is determined according to a fourth formula, where the second hopping parameter is used in the second hopping mode.

Optionally, the method provided in any one of the first aspect to the third aspect may be performed by a terminal device, or may be performed by a module in the terminal device, for example, performed by a chip in the terminal device. Alternatively, the method provided in any one of the first aspect to the third aspect may be performed by a receiver of the configuration information, or may be performed by a module in the receiver, for example, performed by a chip in the receiver.

According to a fourth aspect, this application provides a reference signal transmission method. The method may include: sending configuration information, where the configuration includes a first configuration parameter, the first configuration parameter is used to determine to use a first hopping mode, and the first hopping mode is one or more of the following: group hopping, sequence hopping, cyclic shift hopping, frequency hopping, and time hopping.

It can be learned that, the configuration information including the first configuration parameter is sent to indicate to use the first hopping mode, so that interference between reference signals can be reduced, and scheduling flexibility can be improved.

In a possible implementation, a value of the first configuration parameter is used to determine to use the first hopping mode. Different values of the first configuration parameter indicate to use different first hopping modes.

In another possible implementation, if the value of the first configuration parameter is a first value, it is determined to use the first hopping mode, where the first hopping mode is one or more of the following: the cyclic shift hopping, the frequency hopping, and the time hopping; or if the value of the first configuration parameter is a second value, it is determined to use the first hopping mode, where the first hopping mode is the group hopping and/or the sequence hopping. Two different values of the first configuration parameter respectively indicate hopping modes of different type sets, so that signaling overheads can be reduced.

In a possible implementation, the first hopping mode is specifically one or more of the following: the cyclic shift hopping, the frequency hopping, and the time hopping; and if the configuration information further includes a second configuration parameter, it is determined, based on a value of the second configuration parameter, to use a second hopping mode, where the second hopping mode is the group hopping and/or the sequence hopping. The configuration information includes two configuration parameters to respectively indicate to use hopping modes of different type sets, to improve scheduling flexibility.

In a possible implementation, the configuration information further includes a first initial value parameter and a second initial value parameter; the first initial value parameter is used in the first hopping mode, and the first hopping mode is one or more of the following: the cyclic shift hopping, the frequency hopping, and the time hopping; the second initial value parameter is used in a second hopping mode, and the second hopping mode is the group hopping and/or the sequence hopping; and the first initial value parameter is different from the second initial value parameter.

Further, the first initial value parameter is associated with a coordinated set identifier, and the coordinated set identifier is associated with one or more downlink reference signal resources.

In another possible implementation, when the first hopping mode is one or more of the following: the cyclic shift hopping, the frequency hopping, and the time hopping, and the configuration information does not include a first initial value parameter, but further includes a second initial value parameter, the first initial value parameter is used in the first hopping mode, the second initial value parameter is used in a second hopping mode and/or the first hopping mode, and the second hopping mode is the group hopping and/or the sequence hopping.

In a possible implementation, the first configuration parameter is further used to determine a first hopping parameter, and the first hopping parameter is one or more of the following: a group hopping parameter, a sequence hopping parameter, a cyclic shift hopping parameter, a frequency hopping parameter, and a time hopping parameter. The first hopping parameter is used in the first hopping mode.

According to a fifth aspect, this application provides a reference signal transmission method. The method may include: sending configuration information, where the configuration includes or does not include a first configuration parameter; and if the configuration information includes the first configuration parameter, determining to use a first hopping mode; and/or if the configuration information does not include the first configuration parameter, determining not to use the first hopping mode.

The first hopping mode is one or more of the following: group hopping, sequence hopping, cyclic shift hopping, frequency hopping, and time hopping.

It can be learned that, whether to use the first hopping mode is determined based on whether the configuration information includes the first configuration parameter, so that signaling overheads can be reduced. If the first hopping mode is used, interference between reference signals can be reduced, and scheduling flexibility can be improved. If the first hopping mode is not used, implementation complexity can be reduced.

For possible implementations of the fifth aspect, refer to the possible implementations of the second aspect.

According to a sixth aspect, this application provides a reference signal transmission method. The method may include: sending configuration information, where the configuration includes or does not include a first configuration parameter; and if the configuration information includes the first configuration parameter, determining to use a first hopping mode, and the first hopping mode is one or more of the following: cyclic shift hopping, frequency hopping, and time hopping; and/or if the configuration information does not include the first configuration parameter, determining to use a second hopping mode, where the second hopping mode is group hopping and/or sequence hopping.

It can be learned that, whether to use the first hopping mode or the second hopping mode is determined based on whether the configuration information includes the first configuration parameter, so that signaling overheads can be reduced. If the first hopping mode or the second hopping mode is used, interference between reference signals can be reduced, and scheduling flexibility can be improved.

For possible implementations of the sixth aspect, refer to the possible implementations of the third aspect.

Optionally, the method provided in any one of the fourth aspect to the sixth aspect may be performed by a network device, or may be performed by a module in the network device, for example, performed by a chip in the network device. Alternatively, the method provided in any one of the fourth aspect to the sixth aspect may be performed by a transmitter of the configuration information, or may be performed by a module in the transmitter, for example, performed by a chip in the transmitter.

According to a seventh aspect, this application provides a communication apparatus. The communication apparatus may be a terminal device, or may be an apparatus in the terminal device, or may be an apparatus that can be used in combination with the terminal device. The communication apparatus may alternatively be a chip system. The communication apparatus may perform the method according to the first aspect or the third aspect. A function of the communication apparatus may be implemented by hardware, or may be implemented by executing corresponding software by hardware. The hardware or software includes one or more units or modules corresponding to the foregoing function. The unit or module may be software and/or hardware. For operations performed by the communication apparatus and beneficial effects, refer to the method and beneficial effects in the first aspect or the third aspect.

According to an eighth aspect, this application provides a communication apparatus. The communication apparatus may be a network device, an apparatus in the network device, or an apparatus that can be used in combination with the network device. The communication apparatus may alternatively be a chip system. The communication apparatus may perform the method according to the fourth aspect or the sixth aspect. A function of the communication apparatus may be implemented by hardware, or may be implemented by executing corresponding software by hardware. The hardware or software includes one or more units or modules corresponding to the foregoing function. The unit or module may be software and/or hardware. For operations performed by the communication apparatus and beneficial effects, refer to the method and beneficial effects in the fourth aspect or the sixth aspect.

According to a ninth aspect, this application provides a communication apparatus. The communication apparatus includes a processor, and the processor is configured to perform the method according to any one of the first aspect to the third aspect, or the method according to any one of the fourth aspect to the sixth aspect.

According to a tenth aspect, this application provides a communication apparatus. The communication apparatus includes a processor and a memory, the storage medium stores instructions, and when the instructions are executed by the processor, the communication apparatus is enabled to perform the method according to any one of the first aspect to the third aspect or the method according to any one of the fourth aspect to the sixth aspect.

According to an eleventh aspect, this application provides a communication apparatus. The communication apparatus includes a processor and an interface circuit, the interface circuit is configured to: receive a signal from a communication apparatus other than the communication apparatus and transmit the signal to the processor, or send a signal from the processor to a communication apparatus other than the communication apparatus, and the processor is configured to implement, by using a logic circuit or executing code instructions, the method according to any one of the first aspect to the third aspect or the method according to any one of the fourth aspect to the sixth aspect.

According to a twelfth aspect, this application provides a computer-readable storage medium. The storage medium stores instructions, and when the computer program or the instructions is/are executed by a communication apparatus, the method according to any one of the first aspect to the third aspect or the method according to any one of the fourth aspect to the sixth aspect is implemented.

According to a thirteenth aspect, this application provides a computer program product including instructions. When a communication apparatus reads and executes the instructions, the communication apparatus performs the method according to any one of the first aspect to the third aspect, or the method according to any one of the fourth aspect to the sixth aspect.

**BRIEF DESCRIPTION OF DRAWINGS**

FIG. 1A is an example diagram of interference between uplink reference signals;

FIG. 1B is an example diagram of SRS sending;

FIG. 1C is another example diagram of SRS sending;

FIG. 2 is a diagram of a communication system to which this application is applied;

FIG. 3 is a schematic flowchart of a reference signal transmission method according to this application;

FIG. 4 is a schematic flowchart of another reference signal transmission method according to this application;

FIG. 5 is a schematic flowchart of still another reference signal transmission method according to this application;

FIG. 6 is a diagram of a form of communication between a terminal device and a network device;

FIG. 7 is a diagram of a structure of a communication apparatus according to an embodiment of this application; and

FIG. 8 is a diagram of a structure of another communication apparatus according to an embodiment of this application.

## DESCRIPTION OF EMBODIMENTS

In this application, words such as "first" and "second" are used to distinguish between same items or similar items that have basically a same function or purpose. A person skilled in the art may understand that the terms such as "first" and "second" do not limit a quantity or an execution sequence, and the terms such as "first" and "second" do not indicate a definite difference. A term "and/or" describes only an association relationship between associated objects and indicates that there may be three relationships. For example, A and/or B may indicate the following three cases: Only A exists, both A and B exist, and only B exists. A character "/" generally indicates an "or" relationship between the associated objects.
It should be understood that, in this application, "at least one" means one or more, and "a plurality of" means two or more. In addition, "equal to" in this application may be used together with "greater than", or may be used together with "less than". If "equal to" and "greater than" are used together, a technical solution corresponding to "greater than" is used; and if "equal to" and "less than" are used together, a technical solution corresponding to "less than" is used.
First, related names or terms in this application are described, to facilitate understanding by a person skilled in the art.

## 1. Reference signal

The reference signal is a known signal provided by a transmitter to a receiver for estimating or detecting radio channel information. In other words, the radio channel information in a wireless communication system is obtained based on the reference signal. The radio channel information may be rough, for example, a path loss of a radio channel. The transmitter may perform transmit power control when the transmitter learns path loss-related information. The radio channel information may alternatively be detailed, for example, accurate channel amplitude and phase information of a radio channel in time domain, in frequency domain, and in space domain. In the wireless communication system, the reference signal may be classified into an uplink reference signal and a downlink reference signal.
The uplink reference signal is a reference signal sent by UE to a network device (for example, a base station (base station, BS) or a TRP), that is, the transmitter is the UE, and the receiver is the network device. For example, the uplink reference signal may be a sounding reference signal (sounding reference signal, SRS), a phase-tracking reference signal (phase-tracking reference signal, PTRS), a positioning reference signal, or a demodulation reference signal (demodulation reference signal, DMRS) of uplink information. The uplink information may be a physical uplink shared channel (physical uplink shared channel, PUSCH), data carried on a PUSCH, a physical uplink control channel (physical uplink control channel, PUCCH), data carried on a PUCCH, or the like. For example, the uplink reference signal is a DMRS on a PUSCH or a DMRS on a PUCCH.
The downlink reference signal is a reference signal sent by the network device to the UE, that is, the transmitter is the network device, and the receiver is the UE. For example, the downlink reference signal may include a channel-state information reference signal (channel-state information reference signal, CSI-RS) or a DMRS of downlink information. The downlink information may be a physical downlink shared channel (physical downlink shared channel, PDSCH), data carried on a PDSCH, a physical downlink control channel (physical downlink control channel, PDCCH), data carried on a PDCCH, a physical broadcast channel (physical broadcast channel, PBCH), or the like.

Downlink channel information may be obtained through measurement on the downlink reference signal by the UE, and then the channel information obtained through measurement is reported to the network device, so that the network device sets an appropriate sending parameter for subsequent downlink transmission based on the channel information. Downlink channel information of a TDD system may alternatively be obtained based on channel reciprocity, that is, it is considered that an uplink channel and a downlink channel have some same channel features. The network device may obtain uplink channel information through measurement on an uplink reference signal, and further obtain related downlink channel information through estimation.

2. SRS

The SRS is an uplink reference signal, is sent by UE to a network device, and is used for a function like obtaining radio channel information. The SRS may support the following functions: codebook-based uplink transmission, non-codebook-based uplink transmission, beam management (beam management, BM), antenna switching, and the like. In different application scenarios, the network device may configure one or more SRS resource sets (resource sets) for the UE based on a higher-layer parameter. Applicability of each SRS resource set is configured based on a higher-layer parameter (usage), and each SRS resource set includes one or more SRS resources.

**2.1 SRS sequence**

An SRS sequence of an SRS resource is generated according to the following formulas:

$$r^{(p_i)}(n,l') = r_{u,v}^{(\alpha_i,\delta)}(n) \quad \text{(Formula 1-1)}$$

$$0 \le n \le M_{sc,b}^{\text{SRS}} - 1 \quad \text{(Formula 1-2)}$$

$$l' \in \{0,1,...,N_{\text{symb}}^{\text{SRS}} - 1\} \quad \text{(Formula 1-3)}$$

- $M_{sc,b}^{\text{SRS}}$ is a sequence length of an SRS;

- $r_{u,v}^{(\alpha_i,\delta)}(n)$ is a sequence calculated based on $\alpha_i$ and $\delta$, ($\delta = \log_2(K_{TC})$, $K_{TC} \in \{2,4,8\}$, and $K_{TC}$ is a transmission comb quantity, and is included in a higher-layer parameter transmissionComb;
- $p_i$ is an antenna port, and $\alpha_i$ is a cyclic shift corresponding to the antenna port $p_i$;
- $N_{\text{symb}}^{\text{SRS}}$ is a quantity of time domain symbols of an SRS resource, $n$ corresponds to an index of a frequency domain resource element (resource element, RE) to which the SRS sequence is mapped, and $l'$ corresponds to an index of a time domain symbol to which the SRS sequence is mapped;
- $u$ is a group number of the sequence, and $v$ is a sequence number in a group; and
- $r^{(p_i)}(n,l')$ indicates a value of the SRS sequence on a resource whose RE index is $n$, time domain symbol is $l'$, and antenna port is $p_i$.

It may be understood that the SRS sequence is obtained by performing cyclic shift on an SRS base sequence.
The time domain symbol may be an orthogonal frequency division multiplexing (orthogonal frequency division multiplexing, OFDM) symbol, a discrete Fourier transform-spread OFDM (Discrete Fourier Transform-spread OFDM) symbol, or another symbol. This is not limited in this application.

**2.2 SRS base sequence**

For an SRS whose sequence length is greater than or equal to 36, an SRS base sequence is generated based on a Zadoff-Chu sequence (ZC sequence). For an SRS whose sequence length is less than 36, an SRS base sequence is generated according to a computer exhaustive method. An SRS base sequence related to this application is the ZC sequence, and a ZC sequence whose sequence length is $M$ is defined as follows:

$$z_i^u = e^{-j\frac{\pi q i(i+1)}{M}}, 0 \le i \le M \quad \text{(Formula 1-4)}$$

Herein, $q$ indicates a root index (root index) of the ZC sequence. Specifically, when $M_{ZC} \ge 3N_{sc}^{RB}$ (that is, when the sequence length is greater than or equal to 36), the SRS base sequence is $\overline{r}_{u,v}(0),...,\overline{r}_{u,v}(M_{ZC}-1)$. A generation manner of the base sequence is as follows:

$$\overline{r}_{u,v}(n) = x_q(n \bmod N_{ZC}), x_q(m) = e^{-\frac{\pi q m(m+1)}{N_{ZC}}} \quad \text{(Formula 1-5)}$$

Herein, $q = \lfloor \overline{q}+1/2 \rfloor + v \cdot (-1)^{\lfloor 2\overline{q} \rfloor}, \overline{q} = N_{ZC} \cdot (u+1)/31, \ x_q(m)$ is a basic ZC sequence, and $x_q(m)$ is related to parameters $u$ and $v$.

An SRS sequence may be obtained by performing cyclic shift based on the SRS base sequence (Formula 1-5), which may be indicated as follows:

$$r_{u,v}^{(\alpha,\delta)}(n) = e^{j\alpha n}\overline{r}_{u,v}(n), 0 \le n \le M_{ZC} \quad \text{(Formula 1-6)}$$

Herein, $\alpha$ indicates a cyclic shift parameter.

For two SRS sequences, if SRS base sequences of the two SRS sequences are the same, and values of cyclic shift parameters are different, orthogonality between the two SRS sequences may be implemented. Further, in an actual process of generating an SRS sequence, multiplexing on a same time-frequency resource may be implemented between different SRS ports (or antenna ports) of same UE or between different SRS ports of different UEs in a same cell based on a same SRS base sequence and different values of cyclic shift parameters. Optionally, a cyclic shift parameter may be configured for each SRS resource based on a higher-layer parameter, and a value of the cyclic shift parameter is determined for each SRS port corresponding to each SRS resource based on the higher-layer parameter and a specific rule.

If SRS base sequences of two SRS sequences are the same, and values of cyclic shift parameters are also the same, strong interference may be formed between the two SRS sequences, affecting accuracy of channel measurement. Because a value of a candidate cyclic shift parameter is limited, it is difficult to ensure that SRS ports of all UEs are orthogonal. Therefore, between different UEs in different cells, SRS ports are usually configured with different SRS base sequences. This reduces interference to some extent.

However, due to a limitation of a system capacity, different UEs in different cells may have a same SRS base sequence (a quantity of candidate SRS base sequences is less than a quantity of to-be-scheduled SRS ports). Therefore, group hopping or sequence hopping may be performed on the SRS base sequence, to reduce interference between SRSs.

**2.3 Group hopping and sequence hopping**

To use different sequences (or sequence groups) in different slots to randomize interference between different SRSs, group hopping (group hopping) or sequence hopping (sequence hopping) may be configured for the SRS. The group hopping means that an SRS sequence changes from one group to another group, and the sequence hopping means that an SRS sequence changes from one sequence to another sequence. The group hopping may also be described as group hopping, group frequency hopping, or the like, and the sequence hopping may also be described as sequence hopping, sequence frequency hopping, or the like. In this application, two nouns, namely, the group hopping and the sequence hopping, are used as examples. Another name used to describe the group hopping may replace the group hopping, and another name used to describe the sequence hopping may replace the sequence hopping.

In NR, SRS base sequences are divided into 30 groups, and each group includes one or two sequences. In Formula *1-5*, $u$ is used to define a group number, and $v$ is used to define a sequence number in a group. A calculation manner of $u$ is as follows:

$$u = (f_{gh}(n_{s,f}^{\mu}, l') + n_{ID}^{SRS}) \bmod 30 \quad \text{(Formula 1-7)}$$

- $l' \in \{0, 1, ..., N_{\text{symb}}^{\text{SRS}} - 1\}$, and $N_{\text{symb}}^{\text{SRS}}$ is a quantity of time domain symbols of an SRS resource;

- $f_{\text{gh}}(n_{s,f}^{\mu}, l')$ indicates a pseudo-random sequence, or a value of $f_{\text{gh}}(n_{s,f}^{\mu}, l')$ is 0, and $n_{s,f}^{\mu}$ indicates a quantity of slots included in a subframe;

- when a sequence length is less than five resource blocks (resource blocks, RBs), each group includes one sequence, and five RBs, namely, the sequence length, are 60;

- when a sequence length is greater than or equal to six RBs, each group includes two sequences, and six RBs, namely, the sequence length, is 72;

- a sequence number in a group is defined by V; and

- $n_{\text{ID}}^{\text{SRS}}$ is a sequence identifier (identifier, ID) of an SRS, and is configured based on a higher-layer parameter sequenceId, and configuration information of each SRS resource includes sequenceId.

SRSs for different purposes each may correspond to $n_{\text{ID}}^{\text{SRS}}$ with a different candidate value range. For example, a candidate value range of $n_{\text{ID}}^{\text{SRS}}$ corresponding to an SRS used for multiple input multiple output (multiple input multiple output, MIMO) is different from a candidate value range of $n_{\text{ID}}^{\text{SRS}}$ corresponding to an SRS used for positioning. Higher-layer parameters sequenceId in different information elements (information elements, IEs) each may be configured with $n_{\text{ID}}^{\text{SRS}}$ with a different value range. For example, when $n_{\text{ID}}^{\text{SRS}}$ is configured based on a higher-layer parameter sequenceId in an SRS-Resource IE, a value range of $n_{\text{ID}}^{\text{SRS}}$ is {0, 1, ..., 1023}; and when $n_{\text{ID}}^{\text{SRS}}$ is configured based on a higher-layer parameter sequenceId in an SRS-PosResource-r16 IE, a value range of $n_{\text{ID}}^{\text{SRS}}$ is {0, 1, ..., 65535}.

The foregoing is a calculation manner of the group hopping. In a group (that is, values of $u$ are the same), the sequence hopping may be performed based on a sequence number V in the group. It should be noted that the sequence hopping exists in a scenario in which a sequence length of an SRS is greater than or equal to six RBs. When the sequence length is greater than or equal to six RBs, each group includes two sequences, and therefore the sequence hopping in the group may be implemented.

A calculation manner of V is as follows:

$$v = c(n_{s,f}^{\mu} N_{symb}^{slot} + l_0 + l') \quad \text{(Formula 1-8)}$$

Herein, $n_{s,f}^{\mu}$ indicates a quantity of slots included in a subframe; $N_{symb}^{slot}$ indicates a quantity of OFDM symbols in a slot; $l_0$ indicates a start symbol position of an SRS; and $c(i)$ indicates a pseudo-random sequence. The pseudo-random sequence is based on a Gold sequence whose sequence length is 31:

$$c(n) = (x_1(n + N_C) + x_2(n + N_C)) \bmod 2$$
$$x_1(n + 31) = (x_1(n + 3) + x_1(n)) \bmod 2 \quad \text{(Formula 1-9)}$$
$$x_2(n + 31) = (x_2(n + 3) + x_2(n + 2) + x_2(n + 1) + x_2(n)) \bmod 2$$

Herein, $N_C = 1600$, the 1st m-sequence $x_1(n)$ is initialized to $x_1(0) = 1$, $x_1(n)=0, n=1,2,...,30$, and the 2nd m-sequence $x_2(n)$ is initialized according to Formula 1-10:

$$c_{\text{init}} = \sum_{i=0}^{30} x_2(i) \cdot 2^i \quad \text{(Formula 1-10)}$$

A value of $c_{\text{init}}$ is determined based on application of the pseudo-random sequence. For example, for an SRS sequence, $c_{\text{init}} = n_{\text{ID}}^{\text{SRS}}$ .

**2.4 Configuration of group hopping or sequence hopping**

A higher-layer parameter groupOrSequenceHopping is used to configure group hopping, sequence hopping, or neither group hopping nor sequence hopping. For example, the higher-layer parameter groupOrSequenceHopping may be included in an SRS-Resource IE or an SRS-PosResource-r16 IE. A value range of the higher-layer parameter groupOrSequenceHopping may be {neither, groupHopping, sequenceHopping}.

When the value of the higher-layer parameter groupOrSequenceHopping is "neither", it indicates to use neither the group hopping nor the sequence hopping. To be specific, when UE receives the higher-layer parameter, neither the group hopping nor the sequence hopping is used when an SRS sequence is generated.

When the value of the higher-layer parameter groupOrSequenceHopping is "neither", values of $f_{\text{gh}}(n_{s,f}^{\mu},l^{'})$ and V are shown in Formula 1-11:

$$f_{\text{gh}}(n_{s,f}^{\mu},l^{'}) = 0$$
$$\text{(Formula 1-11)}$$
$$v = 0$$

When the value of the higher-layer parameter groupOrSequenceHopping is "groupHopping", it indicates to use the group hopping. To be specific, when UE receives the higher-layer parameter, the group hopping instead of the sequence hopping is used when an SRS sequence is generated.

When the value of the higher-layer parameter groupOrSequenceHopping is "groupHopping", values of $f_{\text{gh}}(n_{s,f}^{\mu},l^{'})$ and $v$ are shown in Formula 1-12:

$$f_{\text{gh}}(n_{s,f}^{\mu},l^{'}) = (\sum_{m=0}^{7} c(8(n_{s,f}^{\mu} N_{symb}^{slot} + l_0 + l^{'}) + m) \cdot 2^{m}) \bmod 30$$
$$\text{(Formula 1-12)}$$
$$v = 0$$

In Formula 1-12, $c(i)$ indicates a pseudo-random sequence, and $c(i)$ is initialized to $c_{\text{init}} = n_{\text{ID}}^{\text{SRS}}$ at the beginning of each radio frame.

When the value of the higher-layer parameter groupOrSequenceHopping is "sequenceHopping", it indicates that to use the sequence hopping. To be specific, when UE receives the higher-layer parameter, the sequence hopping instead of the group hopping is used when an SRS sequence is generated.

When the value of the higher-layer parameter groupOrSequenceHopping is "sequenceHopping", values of $f_{\text{gh}}(n_{s,f}^{\mu},l^{'})$ and $v$ are shown in Formula 1-13.

$$f_{\text{gh}}(n_{s,f}^{\mu},l^{'}) = 0$$
$$v = \begin{cases} c(n_{s,f}^{\mu} N_{symb}^{slot} + l_0 + l^{'}) & M_{sc,b}^{\text{SRS}} \geq 6 N_{\text{sc}}^{\text{RB}} \\ 0 & \text{otherwise} \end{cases} \quad \text{(Formula 1-13)}$$

In Formula 1-13, $c(i)$ indicates a pseudo-random sequence, and $c(i)$ is initialized to $c_{\text{init}} = n_{\text{ID}}^{\text{SRS}}$ at the beginning of each radio frame.

**3. Hopping mode**

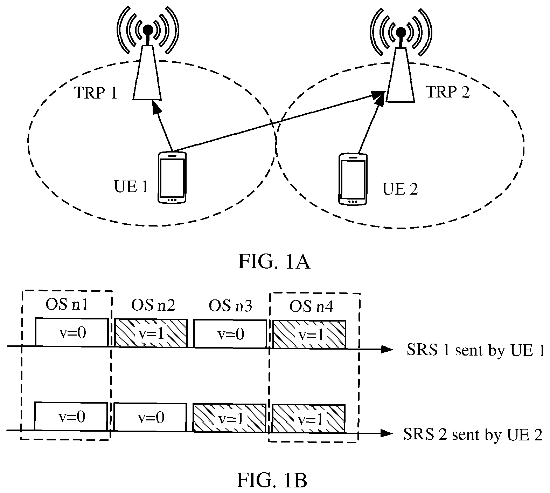

In a joint transmission scenario like CJT, because UEs are deployed more densely, interference between reference signals in coverages of different TRPs is strong. For example, FIG. 1A is an example diagram of interference between uplink reference signals, a TRP 1 is a serving TRP of UE 1 (that is, the TRP 1 provides a service for the UE 1), a TRP 2 is a serving TRP of UE 2, and an uplink reference signal sent by the UE 2 to the TRP 2 is strong interference to an uplink reference signal sent by the UE 1 to the TRP 2. The uplink reference signal may be, for example, an SRS. In this case, an SRS sent by the UE 2 to the TRP 2 is strong interference to an SRS sent by the UE 1 to the TRP 2. In FIG. 1A, the uplink reference signal sent by the UE 2 to the TRP 2 is indicated by a gray arrow, and the uplink reference signal sent by the UE 1 is indicated by a black arrow.

To resolve a problem of interference between SRSs in coverage of TRPs, a hopping mode other than group hopping and sequence hopping may be introduced, for example, cyclic shift hopping, frequency hopping, and time hopping.

### 3.1 Cyclic shift hopping

The cyclic shift hopping may be understood as that values of cyclic shift parameters of SRSs on different symbols are obtained through calculation based on a pseudo-random sequence. For example, when SRS base sequences of two SRS sequences are the same and occupied time domain resources of the two SRS sequences are the same, because the values of the cyclic shift parameters of the SRSs on different symbols are obtained through calculation based on the pseudo-random sequence, a probability that the values of the cyclic shift parameters are the same can be reduced, to increase a probability that the two SRS sequences are orthogonal, so as to reduce interference between the two SRSs. The cyclic shift hopping may also be described as cyclic shift randomization, cyclic shift hopping, cyclic shift frequency hopping, or the like.

For example, FIG. 1B is an example diagram of SRS sending, UE 1 sends an SRS 1 to a TRP 1, and UE 2 sends an SRS 2 to a TRP 2. FIG. 1B shows sequence hopping. An orthogonal frequency division multiplex symbol (orthogonal frequency division multiplex symbol, OS) n1 to an OS n4 are used as an example. For the OS n1, values of V are the same; and for the OS n4, values of V are the same. In this case, SRS base sequences of the SRS 1 and the SRS 2 may be the same. If values of cyclic shift parameters of the two are the same, interference may exist between the SRS 1 and the SRS 2. To overcome the interference between the SRS 1 and the SRS 2, the cyclic shift hopping is used, so that a probability that the SRSs have different values of cyclic shift parameters on the OS n1 and different values of cyclic shift parameters on the OS n4 can be increased. In this way, the interference between the SRS 1 and the SRS 2 can be reduced.

### 3.2 Frequency hopping

The frequency hopping may be understood as that frequency domain positions of SRSs on different symbols are obtained through calculation based on a pseudo-random sequence. For example, frequency domain start positions of two SRSs are randomized, so that frequency domain positions of the two SRSs are as different as possible. The frequency hopping may also be described as frequency domain position randomization, frequency domain sending position randomization, frequency hopping, frequency domain sending position hopping, frequency domain position frequency hopping, frequency domain sending position frequency hopping, or the like.

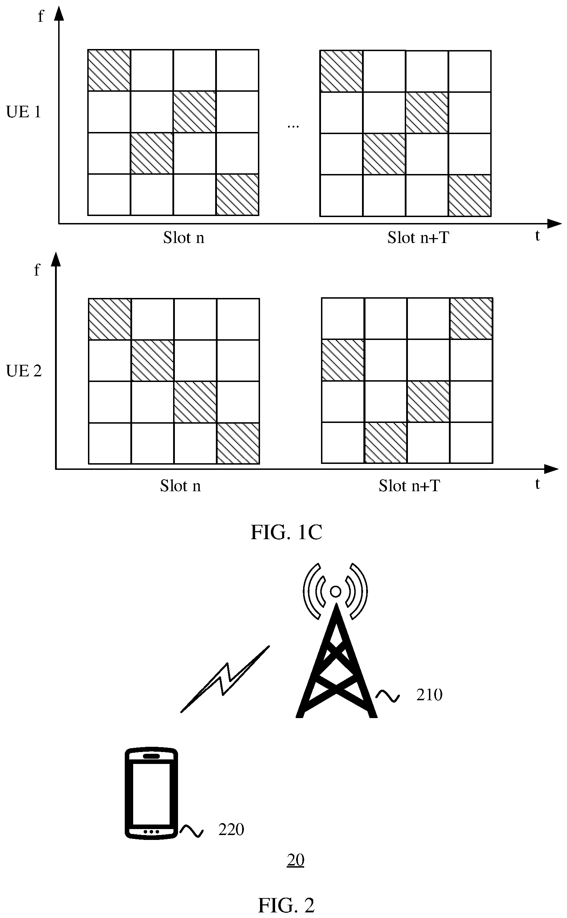

For example, FIG. 1C is another example diagram of SRS sending, UE 1 sends an SRS 1 to a TRP 1, and UE 2 sends an SRS 2 to a TRP 2. In FIG. 1C, the frequency hopping is used. For a slot n, a frequency domain position of the SRS 1 on a symbol and a frequency domain position of the SRS 2 on the same symbol are as different as possible. For a slot n+T, a frequency domain position of the SRS 1 on a symbol and a frequency domain position of the SRS 2 on the same symbol are different. In this way, interference between the SRS 1 and the SRS 2 can be reduced.

### 3.3 Time hopping

The time hopping may be understood as that time domain positions of different SRSs are obtained through calculation based on a pseudo-random sequence. The time hopping is symbol-level hopping, slot-level hopping, or subframe-level hopping. The time hopping may also be described as time domain position randomization, time domain sending position randomization, time hopping, time domain sending position hopping, time domain position frequency hopping, time domain sending position frequency hopping, or the like.

The foregoing three hopping modes and names of the hopping modes are used as examples, and do not constitute a limitation on this application. In actual application, there may be another hopping mode.

Second, a system architecture in this application is described.

This application may be applied to a wireless communication system, for example, a 5th generation (5th generation, 5G) system, or may be referred to as an NR system; for another example, a 6th generation (6th generation, 6G) system, a 7th generation (7th generation, 7G) system, or another future communication system; and for another example, a device to device (device to device, D2D) system, or a machine to machine (machine to machine, M2M) system, or vehicle to everything (vehicle to everything, V2X).

In some examples, the wireless communication system may include a plurality of base stations (BS), and each base station can simultaneously support communication of a plurality of communication devices (for example, UEs). In the NR system, a set including one or more base stations may be defined as a next-generation Node B (next-generation Node B, gNB).

In some examples, the wireless communication system may include some distributed units (distributed unit, DU) in communication with some central units (central unit, CU). A set including one or more DUs in communication with CUs may be defined as an access node (for example, which may be referred to as a BS, a next-generation Node B (gNB), and a multi-transmission and reception point (TRP)). The TRP or the DU may communicate with a UE set over a downlink channel (for example, for transmissions from the TRP to the UE) and communicate with a UE set over an uplink channel (for example, for transmissions from the UE to the TRP). It should be noted that the central unit and the distributed unit may alternatively have other names. This is not limited in this application.

This application may be applied to a communication system shown in FIG. 2. A communication system 20 shown in FIG. 2 may include but is not limited to a network device 210 and a terminal device 220. A quantity and forms of devices in FIG. 2 are used as an example, and do not constitute a limitation on embodiments of this application. For example, in actual application, a plurality of terminal devices may be included.

The terminal device may include various handheld devices, in-vehicle devices, wearable devices, or computing devices that have a wireless communication function, or other processing devices connected to a wireless modem. The terminal device is also referred to as UE, a mobile station (mobile station, MS), a mobile terminal (mobile terminal, MT), or the like. Currently, some examples of the terminal device are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

In this application, an apparatus configured to implement a function of the terminal device may be a terminal device, or may be an apparatus, for example, a chip or a chip module, that can support the terminal device in implementing the function. The apparatus may be mounted to the terminal device, or may be used in combination with the terminal device. In the technical solutions provided in this application, an example in which the apparatus configured to implement the function of the terminal device is the terminal device is for describing the technical solutions provided in this application.

The network device, which may also be referred to as an access network device or an access node, is a radio access network (radio access network, RAN) node (or device) that makes the terminal device access a wireless network, and may also be referred to as a base station (BS). Currently, some examples of RAN nodes are as follows: a gNB, a TRP, a radio network controller (radio network controller, RNC), a node B (Node B, NB), a base station controller (base station controller, BSC), a base transceiver station (base transceiver station, BTS), a home base station (for example, a home evolved Node B, or a home Node B, HNB), a base band unit (base band unit, BBU), a wireless fidelity (wireless fidelity, Wi-Fi) access point (access point, AP), and the like. The network device may alternatively be a radio controller in a cloud radio access network (cloud radio access network, CRAN) scenario. In addition, in a network structure, the network device may include a CU node, a DU node, or a RAN device including a CU node and a DU node.

In this application, an apparatus configured to implement a function of the network device may be a network device, or may be an apparatus, for example, a chip or a chip module, that can support the network device in implementing the function. The apparatus may be mounted to the network device, or may be used in combination with the network device. In the technical solutions provided in this application, an example in which the apparatus configured to implement the function of the network device is the network device is for describing the technical solutions provided in this application.

It can be understood that the communication system described in embodiments of this application is for describing the technical solution in embodiments of this application more clearly, but does not limit the technical solution provided in embodiments of this application. A person skilled in the art may learn that with evolution of a system architecture and emergence of a new service scenario, the technical solutions provided in embodiments of this application is also applicable to a similar technical problem.

The following describes a reference signal transmission method provided in this application.

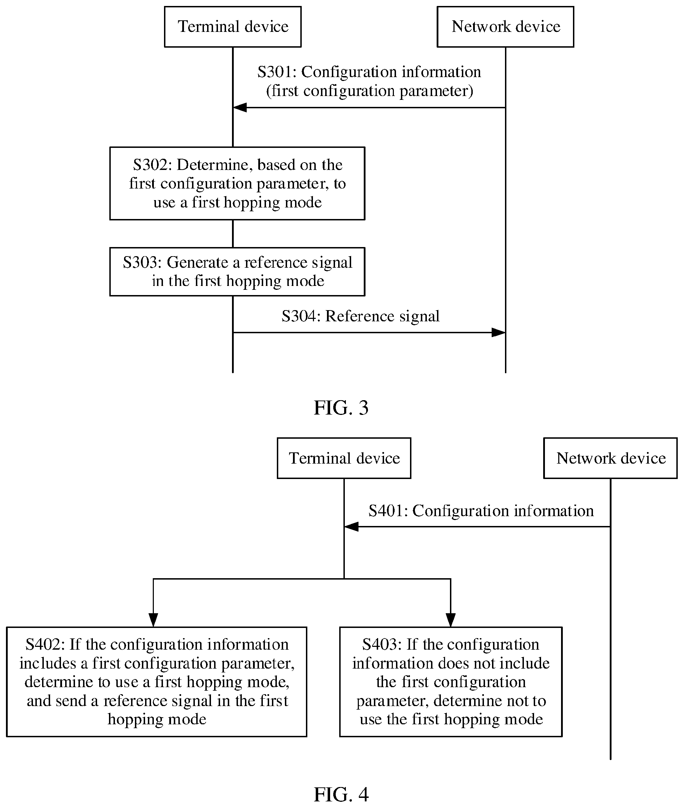

FIG. 3 is a schematic flowchart of a reference signal transmission method according to this application. The method may include but is not limited to the following steps.

S301: A network device sends configuration information to a terminal device. Correspondingly, the terminal device receives the configuration information from the network device. The configuration information includes a first configuration parameter.

In this application, the configuration information may be configured via higher layer signaling, or may be indicated by control information. For example, resource indication information of a reference signal is configured by the network device via radio resource control (radio resource control, RRC) signaling, or is indicated by a medium access control-control element (medium access control-control element, MAC CE). For another example, resource indication information of a reference signal is indicated by downlink control information (downlink control information, DCI), or is indicated by sidelink control information (sidelink control information, SCI).

Optionally, the configuration information may be used for parameter configuration of information. The "information" is an uplink signal, uplink data, a downlink signal, or downlink data. For example, the information is a PDSCH or the information is information carried on a PDSCH. For another example, the information is a PUSCH or the information is information carried on a PUSCH. For another example, the information is a PDCCH or a PUCCH, or the information is information carried on a PDCCH, or the information is information carried on a PUCCH. For another example, the information is a PBCH or information carried on a PBCH. For another example, the "information" is an SRS, a CSI-RS, a DMRS, a positioning reference signal (positioning reference signal, PRS), or a phase-tracking reference signal (phase-tracking reference signal, PTRS). In this embodiment of this application, an example in which the information is the SRS is used, but this embodiment is also applicable to other information.

For example, if the configuration information is used to configure a resource of the reference signal, the configuration information may be reference signal resource configuration information. For example, the reference signal is an SRS. The configuration information is SRS resource configuration information. The SRS resource configuration information is configured based on a higher-layer parameter SRS-Resource, or the SRS resource configuration information is a higher-layer parameter SRS-Resource. Alternatively, the configuration information is SRS resource set configuration information. The SRS resource set configuration information is configured based on a higher-layer parameter SRS-ResourceSet, or the SRS resource configuration information is a higher-layer parameter SRS-ResourceSet. For the terminal device, the network device may configure one or more SRS resource sets for the terminal device based on the higher-layer parameter SRS-ResourceSet. One SRS resource set includes one or more SRS resources, or one higher-layer parameter SRS-ResourceSet includes one or more higher-layer parameters SRS-Resource, or one higher-layer parameter SRS-ResourceSet is used to configure one or more SRS resources.

In a possible implementation, for example, the configuration information is the SRS resource configuration information. One piece of SRS resource configuration information includes one configuration parameter, or one higher-layer parameter SRS-Resource includes one configuration parameter. In other words, each higher-layer parameter SRS-Resource includes one configuration parameter. For example, the one configuration parameter is a first configuration parameter.

The first configuration parameter indicates a specific first hopping mode to be used by the terminal device. Alternatively, the first configuration parameter indicates whether the terminal device uses a first hopping mode. The first configuration parameter may also be described as a first hopping enabling parameter, a first randomization enabling parameter, a first hopping indication parameter, a first randomization indication parameter, or the like. In this application, the first hopping mode may be one or more of the following: group hopping, sequence hopping, cyclic shift hopping, frequency hopping, and time hopping. The five hopping modes are used as examples, and do not constitute a limitation on this application. If there is another hopping mode in actual application, extension may be performed based on this application.

When the first configuration parameter indicates to use a specific first hopping mode, the following Manner 1 and Manner 2 may be used for implementation.

Manner 1: Different values of the first configuration parameter indicate to use different first hopping modes. For example, a value range of the first configuration parameter is {groupHopping, sequenceHopping, cyclicshiftHopping, frequencyHopping, timeHopping}, which respectively correspond to the group hopping, the sequence hopping, the cyclic shift hopping, the frequency hopping, and the time hopping. For example, when a value of the first configuration parameter is "cyclicshiftHopping", it indicates to use the cyclic shift hopping. For another example, a value range of the first configuration parameter is {groupHopping, sequenceHopping, cyclicshiftHopping, frequencyHopping, timeHopping, null}. When a value of the first configuration parameter is "null", it indicates not to use the first hopping mode. For another example, a value range of the first configuration parameter is {1, 2, 3, 4, 5}, which respectively correspond to the group hopping, the sequence hopping, the cyclic shift hopping, the frequency hopping, and the time hopping. When a value of the first configuration parameter is "3", it indicates to use the cyclic shift hopping. For another example, a value range of the first configuration parameter is {0, 1, 2, 3, 4, 5}. When a value of the first configuration parameter is "0", it indicates not to use the first hopping mode. In Manner 1, different values of the first configuration parameter indicate different hopping modes, so that scheduling is more diversified.

In Manner 1, a correspondence between different values of the first configuration parameter and different first hopping modes may be predefined in a protocol, or may be configured by the network device, or may be dynamically indicated by the network device, or the like.

Optionally, the first hopping mode is reported by the terminal device. The terminal device sends first report information, where the first report information indicates that the hopping mode supported by the terminal device is one or more of the following: the group hopping, the sequence hopping, the cyclic shift hopping, the frequency hopping, and the time hopping.

Manner 2: When a value of the first configuration parameter is a first value, it indicates to use the first hopping mode, where the first hopping mode is specifically one or more of the following: the cyclic shift hopping, the frequency hopping, and the time hopping, or when a value of the first configuration parameter is a second value, it indicates to use the first hopping mode, where the first hopping mode is the group hopping and/or the sequence hopping. The cyclic shift hopping, the frequency hopping, and the time hopping are used as a hopping type set, and the group hopping and/or the sequence hopping are/is used as a hopping type set, where different values of the first configuration parameter indicate to use hopping modes of different types sets. For example, when the first value is "1", it indicates to use one or more of the cyclic shift hopping, the frequency hopping, and the time hopping, or when the first value is "0", it indicates to use the group hopping and/or the sequence hopping. In Manner 2, a specific type of to-be-used hopping mode may be indicated by a field whose bit length is 1, to reduce signaling overheads. For another example, the first configuration parameter is "group-OrSequenceHopping", and a value range of the first configuration parameter is {groupHopping, sequenceHopping, neither}. When the value of the first configuration parameter is "neither", it indicates to use one or more of the cyclic shift hopping, the frequency hopping, and the time hopping; or when the value of the first configuration parameter is "groupHopping" or "sequenceHopping", it indicates to use the group hopping or the sequence hopping. No new field needs to be added for indication, so that signaling overheads can be further reduced.

In Manner 2, the cyclic shift hopping, the frequency hopping, and the time hopping are used as a hopping type set, and the group hopping and/or the sequence hopping are/is used as a hopping type set. This is used as an example. Actually, another classification method may be used. A correspondence between different values of the first configuration parameter and hopping modes of different types sets may be predefined in a protocol, or may be configured by the network device, or may be dynamically indicated by the network device, or the like.

In this embodiment of this application, the value of the configuration parameter may be a value or a status value. For example, the first value and the second value are numeric values, or the first value and the second value are status values. The second value may be one value or a set including a plurality of values.

Manner 1 and Manner 2 are used as examples. In actual application, another manner may be used to indicate, based on the first configuration parameter, a hopping mode to be used.

In another possible implementation, for example, the configuration information is SRS resource configuration information. One piece of SRS resource configuration information includes a plurality of configuration parameters, or one higher-layer parameter SRS-Resource includes a plurality of configuration parameters. In other words, each higher-layer parameter SRS-Resource includes a plurality of configuration parameters. For example, the plurality of configuration parameters are two configuration parameters, and the two configuration parameters are, for example, a first configuration parameter and a second configuration parameter.

The first configuration parameter indicates to use a first hopping mode, and the first hopping mode is specifically one or more of the following: the cyclic shift hopping, the frequency hopping, and the time hopping. The second configuration parameter indicates to use a second hopping mode, and the first hopping mode is the group hopping and/or the sequence hopping. The first configuration parameter is independent of the second configuration parameter. The second configuration parameter may be a higher-layer parameter "groupOrSequenceHopping". The first configuration parameter may be a higher-layer parameter similar to "groupOrSequenceHopping". A specific parameter name is not limited in this application, for example, " cyclicshiftOrfrequencyOrtimeHopping", "cyclicshiftOrfrequencyHopping", "cyclicshiftOrtimeHopping", or "frequencyOrtimeHopping".

Further, the configuration information may include a plurality of configuration parameters. One configuration parameter indicates to use a hopping mode. For example, the configuration information includes five configuration parameters, and each configuration parameter indicates to use a hopping mode corresponding to the configuration parameter. For example, the 1st configuration parameter indicates to use the group hopping, the 2nd configuration parameter indicates to use the sequence hopping, the 3rd configuration parameter indicates to use the cyclic shift hopping, the 4th configuration parameter indicates to use the frequency hopping, and the 5th configuration parameter indicates to use the time hopping. A correspondence between different configuration parameters and hopping modes may be predefined in a protocol, or may be configured by the network device, or may be dynamically indicated by the network device, or the like.

S302: The terminal device determines, based on the first configuration parameter, to use the first hopping mode.

For the foregoing Manner 1, the terminal device determines, based on the value of the first configuration parameter, to use a first hopping mode corresponding to the value.

For the foregoing Manner 2, the terminal device determines, based on whether the value of the first configuration parameter is the first value or the second value, to use a corresponding first hopping mode. For example, when the value of the first configuration parameter is the first value, it is determined to use one or more of the cyclic shift hopping, the frequency hopping, and the time hopping; or when the value of the first configuration parameter is the first value, it is determined to use the group hopping and/or the sequence hopping.

If the configuration information includes the first configuration parameter and the second configuration parameter, the terminal device determines the first hopping mode based on the value of the first configuration parameter, and determines the second hopping mode based on the value of the second configuration parameter. In this case, the first hopping mode and the second hopping mode may be used simultaneously, or it is described as that both the first hopping mode and the second hopping mode may be enabled.

Optionally, when determining to use one or more of the cyclic shift hopping, the frequency hopping, and the time hopping, the terminal device may specifically select, based on a capability of the terminal device and/or a hopping mode supported by the network device, to use a specific hopping mode or several specific hopping modes. For example, if the terminal device supports the cyclic shift hopping, but does not support the frequency hopping or the time hopping, the terminal device finally selects to use the cyclic shift hopping.

S303: The terminal device generates a reference signal in the first hopping mode.

Optionally, that the terminal device generates a reference signal in the first hopping mode may include: The terminal device uses the first hopping mode, and generates the reference signal based on a hopping parameter of the first hopping mode.

The hopping parameter of the first hopping mode may be determined in the following several manners.

Manner A: Different values of the first configuration parameter further indicate different first hopping parameters. The first hopping parameter may be one or more of the following: a group hopping parameter, a sequence hopping parameter, a cyclic shift hopping parameter, a frequency hopping parameter, and a time hopping parameter. The terminal device determines, based on the value of the first configuration parameter, the first hopping parameter corresponding to the value, where the first hopping parameter is the hopping parameter of the first hopping mode.

The group hopping parameter may be indicated as, for example, $u$, and a calculation manner of the group hopping parameter may refer to (Formula 1-7) and/or (Formula 1-12); the sequence hopping parameter may be indicated as, for example, $v$, and a calculation manner of the sequence hopping parameter may refer to (Formula 1-8) and/or (Formula 1-13); the cyclic shift hopping parameter may be indicated as, for example, $\alpha$, and a calculation manner of the cyclic shift hopping parameter may be associated with a pseudo-random sequence; the frequency hopping parameter may be indicated as, for example, $F$, and a calculation manner of the frequency hopping parameter may be associated with a pseudo-random sequence; and the time hopping parameter may be indicated as, for example, $T$, and a calculation manner of the time hopping parameter may be associated with a pseudo-random sequence. When it is determined, based on the first configuration parameter, to use the first hopping mode, the first hopping parameter is obtained based on a pseudo-random sequence; and when it is determined, based on the first configuration parameter, not to use the first hopping mode, the hopping parameter is 0.

A correspondence between different values of the first configuration parameter and different first hopping parameters may be predefined in a protocol, or may be configured by the network device, or may be dynamically indicated by the network device, or the like.

Optionally, when it is determined, based on the first configuration parameter, to use the foregoing hopping mode, the first hopping parameter may be determined according to a first formula. For example, the first hopping mode is the group hopping, the first formula may be (Formula 1-12), and $u$ is determined according to (Formula 1-12). For another example, the first hopping mode is the sequence hopping, the first formula may be (Formula 1-13), and $v$ is determined according to (Formula 1-13). For another hopping mode, the first formula may be different. When it is determined, based on the first configuration parameter, not to use the foregoing hopping mode, the hopping parameter may be determined according to a second formula. For example, the hopping parameter is 0 according to the second formula, and for example, $u$=0 and $v$=0 according to (Formula 1-11).

Manner B: When the value of the first configuration parameter is the first value, it further indicates a first hopping parameter, where the first hopping parameter is specifically one or more of the following: a cyclic shift hopping parameter, a frequency hopping parameter, and a time hopping parameter; or when the value of the first configuration parameter is the second value, it still indicates the first hopping parameter, where the first hopping parameter is a group hopping parameter and/or a sequence hopping parameter. The terminal device determines the first hopping parameter based on whether the value of the first configuration parameter is the first value or the second value.

It may be understood that when the value of the first configuration parameter is the first value, the indicated first hopping parameter is used for one or more of the cyclic shift hopping parameter, the frequency hopping parameter, and the time hopping parameter.

Manner C: If the configuration information includes the first configuration parameter and the second configuration parameter, the first configuration parameter further indicates a first hopping parameter, where the first hopping parameter is specifically one or more of the following: a cyclic shift hopping parameter, a frequency hopping parameter, and a time hopping parameter, and the first hopping parameter is used in the first hopping mode; and the second configuration parameter further indicates the second hopping parameter, where the second hopping parameter is a group hopping parameter and/or a sequence hopping parameter, and the second hopping parameter is used in the second hopping mode.

Manner D: When the first hopping mode is one or more of the cyclic shift hopping, the frequency hopping, and the time hopping, and the configuration information further includes a first initial value parameter and a second initial value parameter, the first initial value parameter is used in the first hopping mode, the second initial value parameter is used in the second hopping mode, the second hopping mode is the group hopping and/or the sequence hopping, and the first initial value parameter is different from the second initial value parameter. The terminal device determines the hopping parameter of the first hopping mode based on the first initial value parameter. For example, an initial value of the first hopping mode is determined based on the first initial value parameter, and the hopping parameter of the first hopping mode is determined based on the initial value of the first hopping mode.

That the first initial value parameter is different from the second initial value parameter means that the first initial value parameter and the second initial value parameter are two higher-layer parameters. A value of the first initial value parameter may be the same as or different from a value of the second initial value parameter. The first initial value parameter may be expressed as $c_{\text{init},1}$, used to generate a pseudo-random sequence for the first hopping mode, so as to obtain the hopping parameter through calculation based on the pseudo-random sequence. The second initial value parameter may be expressed as $c_{\text{init},2}$, used to generate a pseudo-random sequence for the second hopping mode, so as to obtain the hopping parameter through calculation based on the pseudo-random sequence. Optionally, $c_{\text{init},2} = n_{\text{ID}}^{\text{SRS}}$, that is, for the group hopping and/or the sequence hopping, the second initial value parameter is $n_{\text{ID}}^{\text{SRS}}$, and is configured based on a higher-layer parameter sequenceId.

For example, the first hopping mode is the cyclic shift hopping, and the terminal device generates, based on the first initial value parameter $c_{\text{init},1}$, a pseudo-random sequence of the cyclic shift hopping, and generates a cyclic shift hopping parameter $\alpha$ based on the pseudo-random sequence.

Optionally, the first initial value parameter may be associated with a coordinated set identifier, the coordinated set identifier is used to identify a coordinated set, and the coordinated set identifier is associated with one or more downlink reference signal resources. The downlink reference signal resource is, for example, a CSI-RS resource or a path loss reference signal resource. The coordinated set may be understood as a set including one or more TRPs, and one TRP is associated with one CSI-RS resource. The first initial value is associated with the protocol set identifier, to further improve scheduling flexibility. The coordinated set identifier may be configured, predefined, indicated by dynamic signaling, or reported by the terminal device.

Manner E: When the first hopping mode is one or more of the cyclic shift hopping, the frequency hopping, and the time hopping, and the configuration information does not include a first initial value parameter, but the configuration information further includes a second initial value parameter, the first initial value parameter is used in the first hopping mode, the second initial value parameter is used in the second hopping mode and the first hopping mode, and the second hopping mode is the group hopping and/or the sequence hopping. In other words, the first initial value parameter used in the first hopping mode is the same as the second initial value parameter, but the first initial value parameter is not configured in the configuration information. The terminal device determines the hopping parameter of the first hopping mode based on the second initial value parameter. For example, an initial value of the first hopping mode is determined based on the second initial value parameter, and the hopping parameter of the first hopping mode is determined based on the initial value of the first hopping mode. In other words, if an initial value parameter is not configured in the configuration information for the first hopping mode, the initial value parameter corresponding to the first hopping mode may be the second initial value parameter, to save signaling.

For example, the first hopping mode is the cyclic shift hopping, and the terminal device generates, based on the second initial value parameter $n_{\text{ID}}^{\text{SRS}}$, a pseudo-random sequence of the cyclic shift hopping, and generates a cyclic shift hopping parameter $\alpha$ based on the pseudo-random sequence.

Manner F: If the configuration information does not include a first initial value parameter, the terminal device may generate an initial value parameter of the first hopping mode, and determine the hopping parameter of the first hopping mode based on the initial value parameter of the first hopping mode. For example, the terminal device may generate the initial value parameter $n_{\text{ID}}^{\text{SRS}}$ of the first hopping mode, that is, the initial value parameter of the first hopping mode is $n_{\text{ID}}^{\text{SRS}}$ by default. When the initial value parameter is not configured for the first hopping mode, the initial value parameter of the first hopping mode may be automatically generated, to reduce implementation complexity.

Manner A to Manner F are used as examples, and do not constitute a limitation on this application.

S304: The terminal device sends the reference signal to the network device. Correspondingly, the network device receives the reference signal from the terminal device.

Because the reference signal is generated in the first hopping mode, the network device performs processing such as receiving, channel estimation, or demodulation on the reference signal in the first hopping mode.

In the embodiment shown in FIG. 3, it is determined, based on the first configuration parameter, to use the first hopping mode, so that interference between reference signals can be reduced, and scheduling flexibility can be improved.

In an optional embodiment, the terminal device determines the first hopping parameter based on the first configuration parameter, generates the reference signal based on the first hopping parameter, and sends the reference signal to the network device. For determining, by the terminal device, the first hopping parameter based on the first configuration parameter, refer to the foregoing Manner A. A difference lies in that in this embodiment, the hopping mode can be determined by determining the hopping parameter, and the first configuration parameter is not used to indicate a hopping mode to be used, so that a calculation amount of the terminal device can be reduced.

FIG. 4 is a schematic flowchart of another reference signal transmission method according to this application. The method may include but is not limited to the following steps.

S401: A network device sends configuration information to a terminal device. Correspondingly, the terminal device receives the configuration information from the network device.

S402: If the configuration information includes a first configuration parameter, the terminal device determines to use a first hopping mode, and sends a reference signal in the first hopping mode.

S403: If the configuration information does not include a first configuration parameter, the terminal device determines not to use a first hopping mode.

For step S402, refer to specific descriptions of step S302 to step S304 in the embodiment shown in FIG. 3. Details are not described herein again.

In an implementation, the first hopping mode may be one or more of the following: group hopping, sequence hopping, cyclic shift hopping, frequency hopping, and time hopping. In this case, if the configuration information does not include the first configuration parameter, the terminal device does not use the hopping mode.

In another implementation, the first hopping mode may be one or more of the following: cyclic shift hopping, frequency hopping, and time hopping. In this case, if the configuration information does not include the first configuration parameter, the terminal device does not use the hopping mode, or the terminal device uses a second hopping mode, where the second hopping mode is group hopping or sequence hopping.

Optionally, if the configuration information includes the first configuration parameter, the terminal device determines a first hopping parameter according to a first formula. The first hopping parameter is used in the first hopping mode, that is, the terminal device sends the reference signal in the first hopping mode based on the first hopping parameter. For example, the first hopping mode is the group hopping, the first formula may be (Formula 1-12), and $u$ is determined according to (Formula 1-12). For another example, the first hopping mode is the sequence hopping, the first formula may be (Formula 1-13), and $v$ is determined according to (Formula 1-13). For another hopping mode, the first formula may be different.

If the configuration information does not include the first configuration parameter, the terminal device determines the hopping parameter according to a second formula. For example, the second formula is (Formula 1-11), and $u=0$ and $v=0$ are determined according to (Formula 1-11), to generate and send the reference signal.

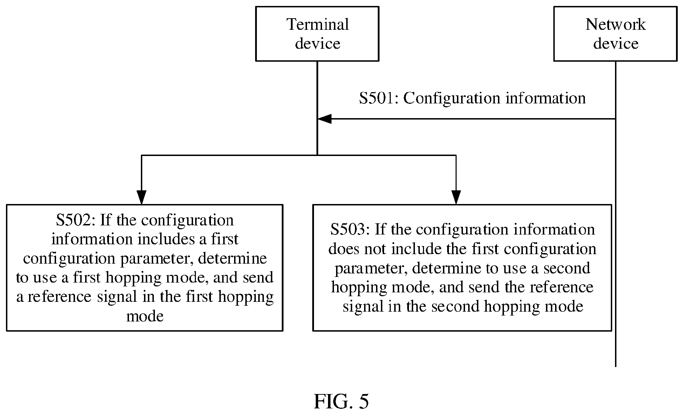

FIG. 5 is a schematic flowchart of still another reference signal transmission method according to this application. The method may include but is not limited to the following steps.

S501: A network device sends configuration information to a terminal device. Correspondingly, the terminal device receives the configuration information from the network device.

S502: If the configuration information includes a first configuration parameter, the terminal device determines to use a first hopping mode, and sends a reference signal in the first hopping mode. The first hopping mode is one or more of the following: cyclic shift hopping, frequency hopping, and time hopping.

S503: If the configuration information does not include a first configuration parameter, the terminal device determines to use a second hopping mode, and sends a reference signal in the second hopping mode. The second hopping mode is group hopping and/or sequence hopping.

For step S502, refer to specific descriptions of step S302 to step S304 in the embodiment shown in FIG. 3. Details are not described herein again.

Optionally, if the configuration information includes the first configuration parameter, a first hopping parameter is determined according to a third formula, where the first hopping parameter is used in the first hopping mode; and/or if the configuration information does not include the first configuration parameter, a second hopping parameter is determined according to a fourth formula, where the second hopping parameter is used in the second hopping mode. For example, if the configuration information includes the first configuration parameter "cyclicshiftOrfrequencyOrtimeHopping", and a value of the first configuration parameter is "cyclicshiftHopping", $\alpha$ is determined according to a formula (related to a pseudo-random sequence) used to calculate $\alpha$; and/or if the configuration information does not include the first configuration parameter "cyclicshiftOrfrequencyOrtimeHopping", $u$ is determined according to (Formula 1-12), or $v$ is determined according to (Formula 1-13).

It should be understood that in the foregoing embodiments, the terminal device and/or the network device may perform a part or all of the steps in embodiments. These steps or operations are merely examples. Other operations or variations of various operations may be further performed in embodiments of this application. In addition, the steps may be performed in different sequences presented in embodiments, and not all operations in embodiments of this application may need to be performed. In addition, sequence numbers of the steps do not mean an execution sequence. An execution sequence of the processes should be determined based on functions and internal logic of the processes, and should not constitute any limitation on the implementation processes of embodiments of this application.

To implement the data transmission method provided in embodiments of this application, the terminal device and the network device may each include a hardware structure and a software module, and implement the foregoing functions in a form of hardware structure, software module, or combination of the hardware structure and the software module. One of the foregoing various functions may be performed in the form of the hardware structure, the software module, or the combination of the hardware structure and the software module.

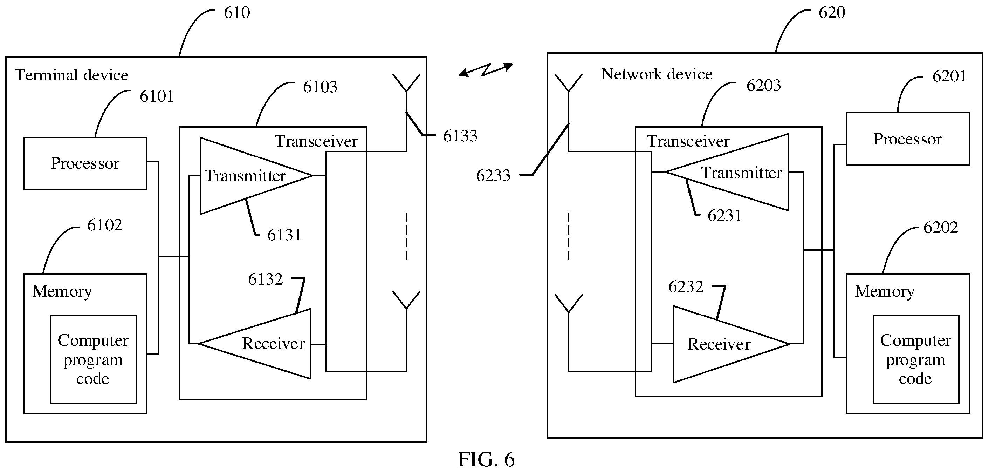

FIG. 6 is a diagram of a form of communication between a terminal device and a network device. As shown in FIG. 6, a terminal device 610 includes a processor 6101, a memory 6102, and a transceiver 6103. The transceiver 6103 includes a transmitter 6131, a receiver 6132, and an antenna 6133. A network device 620 includes a processor 6201, a memory 6202, and a transceiver 6203. The transceiver 6203 includes a transmitter 6231, a receiver 6232, and an antenna 6233. The receiver 6132 may be configured to receive, through the antenna 6133, information sent by the network device 620, and the transmitter 6131 may be configured to send, through the antenna 6133, information to the network device 620. The transmitter 6231 may be configured to send, through the antenna 6233, information to the terminal device 610, and the receiver 6232 may be configured to receive, through the antenna 6233, information sent by the terminal device 610.

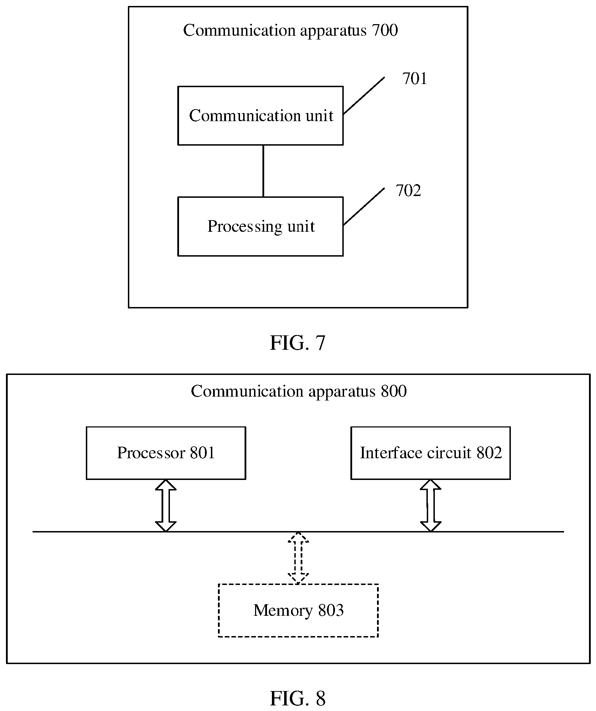

FIG. 7 is a diagram of a structure of a communication apparatus according to an embodiment of this application. FIG. 8 is a diagram of a structure of another communication apparatus according to an embodiment of this application. The communication apparatuses may be configured to implement the functions of the terminal device or the network device in the foregoing method embodiments, and therefore can also implement the beneficial effects in the foregoing method embodiments.

A communication apparatus 700 shown in FIG. 7 may include a communication unit 701 and a processing unit 702. The communication unit 701 may include a sending unit and/or a receiving unit. The sending unit is configured to implement a sending function, the receiving unit is configured to implement a receiving function, and the communication unit 701 may implement the sending function and/or the receiving function. The communication unit may also be described as a transceiver unit.

In an implementation, the communication apparatus 700 may be a terminal device, or may be an apparatus in the terminal device, or may be an apparatus having a function of the terminal device. The communication apparatus 700 may alternatively be a chip or a chip system of the terminal device.

In an implementation, the communication apparatus 700 may perform related operations of the terminal device in the embodiment shown in FIG. 3.

The communication unit 701 is configured to receive configuration information, where the configuration information includes a first configuration parameter.

The processing unit 702 is configured to determine, based on the first configuration parameter, to use a first hopping mode; and generate a reference signal in the first hopping mode, where the first hopping mode is one or more of the following: group hopping, sequence hopping, cyclic shift hopping, frequency hopping, and time hopping.

The communication unit 701 is further configured to send the reference signal.

Optionally, the processing unit 702 is specifically configured to determine, based on a value of the first configuration parameter, to use the first hopping mode.

Optionally, the processing unit 702 is specifically configured to: when the value of the first configuration parameter is a first value, determine to use the first hopping mode, where the first hopping mode is one or more of the following: the cyclic shift hopping, the frequency hopping, and the time hopping; or when the value of the first configuration parameter is a second value, determine to use the first hopping mode, where the first hopping mode is the group hopping and/or the sequence hopping.

Optionally, the first hopping mode is one or more of the following: the cyclic shift hopping, the frequency hopping, and the time hopping; and the configuration information further includes a second configuration parameter.

The processing unit 702 is further configured to determine, based on a value of the second configuration parameter, to use a second hopping mode, where the second hopping mode is the group hopping and/or the sequence hopping.

Optionally, the processing unit 702 is specifically configured to generate the reference signal in the first hopping mode and the second hopping mode.

Optionally, the configuration information further includes a first initial value parameter and a second initial value parameter; the first initial value parameter is used in the first hopping mode, and the second initial value parameter is used in the second hopping mode; the first hopping mode is one or more of the following: the cyclic shift hopping, the frequency hopping, and the time hopping; the second hopping mode is the group hopping and/or the sequence hopping; and the first initial value parameter is different from the second initial value parameter.

Optionally, the first initial value parameter is associated with a coordinated set identifier, and the coordinated set identifier is associated with one or more downlink reference signal resources.

Optionally, the processing unit 702 is specifically configured to: determine an initial value of the first hopping mode based on the first initial value parameter; determine a hopping parameter of the first hopping mode based on the initial value of the first hopping mode; and generate the reference signal based on the hopping parameter of the first hopping mode.

Optionally, the first hopping mode is one or more of the following: the cyclic shift hopping, the frequency hopping, or the time hopping, and the configuration information further includes the second initial value parameter.

The processing unit 702 is specifically configured to: if the configuration information further includes the first initial value parameter, determine the initial value of the first hopping mode based on the first initial value parameter; determine the hopping parameter of the first hopping mode based on the initial value of the first hopping mode; generate the reference signal based on the hopping parameter of the first hopping mode; and/or if the configuration information does not include the first initial value parameter, determine the initial value of the first hopping mode based on the second initial value parameter; determine the hopping parameter of the first hopping mode based on the initial value of the first hopping mode; and generate the reference signal based on the hopping parameter of the first hopping mode.

The first initial value parameter is used in the first hopping mode, the second initial value parameter is used in the second hopping mode and/or the first hopping mode, and the second hopping mode is the group hopping and/or the sequence hopping.

Optionally, the processing unit 702 is further configured to determine a first hopping parameter based on the first configuration parameter, where the first hopping parameter is one or more of the following: a group hopping parameter, a sequence hopping parameter, a cyclic shift hopping parameter, a frequency hopping parameter, and a time hopping parameter.

The processing unit 702 is specifically configured to generate the reference signal in the first hopping mode based on the first hopping parameter.

Optionally, the first hopping parameter is one or more of the following: the cyclic shift hopping parameter, the frequency hopping parameter, and the time hopping parameter; and the configuration information further includes the second configuration parameter.

The processing unit 702 is further configured to determine a second hopping parameter based on the second configuration parameter, where the second hopping parameter is the group hopping parameter and/or the sequence hopping parameter; and the second hopping parameter is used in the second hopping mode, and the second hopping mode is the group hopping and/or the sequence hopping.

Optionally, the processing unit 702 is further configured to determine the first hopping parameter, based on the first configuration parameter and a first formula, where the first hopping parameter is one or more of the following: the group hopping parameter, the sequence hopping parameter, the cyclic shift hopping parameter, the frequency hopping parameter, and the time hopping parameter.

The processing unit 702 is specifically configured to generate the reference signal in the first hopping mode based on the first hopping parameter.

In another implementation, the communication apparatus 700 may perform related operations of the terminal device in the embodiment shown in FIG. 4.

The communication unit 701 is configured to receive configuration information.

The processing unit 702 is configured to: if the configuration information includes a first configuration parameter, determine to use a first hopping mode, and generate a reference signal in the first hopping mode; and the communication unit 701 is further configured to send the reference signal.

The processing unit 702 is further configured to: if the configuration information does not include a first configuration parameter, determine not to use a first hopping mode.

The first hopping mode is one or more of the following: group hopping, sequence hopping, cyclic shift hopping, frequency hopping, and time hopping.

Optionally, the processing unit 702 is further configured to: if the configuration information includes the first configuration parameter, determine a first hopping parameter according to a first formula.

The processing unit 702 is specifically configured to generate the reference signal in the first hopping mode based on the first hopping parameter.

Optionally, the processing unit 702 is further configured to: if the configuration information does not include the first configuration parameter, determine the hopping parameter according to a second formula; and generate the reference signal based on the hopping parameter.

In another implementation, the communication apparatus 700 may perform related operations of the terminal device in the embodiment shown in FIG. 5.

The communication unit 701 is configured to receive configuration information.

The processing unit 702 is configured to: if the configuration information includes a first configuration parameter, determine to use a first hopping mode, and generate a reference signal in the first hopping mode; and the communication unit 701 is further configured to send the reference signal, where the first hopping mode is one or more of the following: cyclic shift hopping, frequency hopping, and time hopping.

The processing unit 702 is further configured to: if the configuration information does not include a first configuration parameter, determine to use a second hopping mode, and generate a reference signal in the second hopping mode; and the communication unit 701 is further configured to send the reference signal, where the second hopping mode is group hopping and/or sequence hopping.

Optionally, the processing unit 702 is further configured to: if the configuration information includes the first configuration parameter, determine a first hopping parameter according to a third formula, where the first hopping parameter is used in the first hopping mode; and/or if the configuration information does not include the first configuration parameter, determine a second hopping parameter according to a fourth formula, where the second hopping parameter is used in the second hopping mode.

In another implementation, the communication apparatus 700 may be a network device, or may be an apparatus in the network device, or may be an apparatus having a function of the network device. The communication apparatus 700 may alternatively be a chip or a chip system of the network device.

In an implementation, the communication apparatus 700 may perform related operations of the network device in the embodiment shown in FIG. 3.

The communication unit 701 is configured to send configuration information, where the configuration includes a first configuration parameter, the first configuration parameter is used to determine to use a first hopping mode, and the first hopping mode is one or more of the following: group hopping, sequence hopping, cyclic shift hopping, frequency hopping, and time hopping.

In another implementation, the communication apparatus 700 may perform related operations of the network device in the embodiment shown in FIG. 4.

The communication unit 701 is configured to send configuration information, where the configuration includes or does not include a first configuration parameter. If the configuration information includes the first configuration parameter, it is determined to use a first hopping mode; and/or

if the configuration information does not include the first configuration parameter, it is determined not to use the first hopping mode.

The first hopping mode is one or more of the following: group hopping, sequence hopping, cyclic shift hopping, frequency hopping, and time hopping.

In another implementation, the communication apparatus 700 may perform related operations of the network device in the embodiment shown in FIG. 5.

The communication unit 701 is configured to: send configuration information, where the configuration includes or does not include a first configuration parameter. If the configuration information includes the first configuration parameter, it is determined to use a first hopping mode, where the first hopping mode is one or more of the following: cyclic shift hopping, frequency hopping, and time hopping; and/or if the configuration information does not include the first configuration parameter, it is determined to use a second hopping mode, where the second hopping mode is group hopping and/or sequence hopping.

A communication apparatus 800 shown in FIG. 8 may include a processor 801 and an interface circuit 802. The processor 801 and the interface circuit 802 are coupled to each other. It may be understood that the interface circuit 802 may be an interface circuit or an input/output interface. Optionally, the communication apparatus 800 may further include a memory 803, configured to store instructions executed by the processor 801, or store input data required by the processor 801 to run the instructions, or store data generated after the processor 801 runs the instructions.

For example, the communication apparatus 800 may be a terminal device, and the interface circuit 802 is configured to perform step S301 and step S304 in FIG. 3. For example, the communication apparatus 800 may be a network device, and the interface circuit 802 is configured to perform step S301 and step S304 in FIG. 3.

When the communication apparatus is a chip used in the terminal device, the chip of the terminal device implements the function of the terminal device in the foregoing method embodiments. The chip receives information from another module (for example, a radio frequency module or an antenna) in the terminal device, where the information is sent by the network device to the terminal device. Alternatively, the chip sends information to another module (for example, a radio frequency module or an antenna) in the terminal device, where the information is sent by the terminal device to the network device.

When the communication apparatus is a chip used in the network device, the chip of the network device implements the function of the network device in the foregoing method embodiments. The chip receives information from another module (for example, a radio frequency module or an antenna) in the network device, where the information is sent by the terminal device to the network device. Alternatively, the chip sends information to another module (for example, a radio frequency module or an antenna) in the network device, where the information is sent by the network device to the terminal device.

It may be understood that the processor in embodiments of this application may be a central processing unit (central processing unit, CPU), or may be another general purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The general purpose processor may be a microprocessor or any regular processor or the like. When sending information, a device (the terminal device or the network device) outputs the information through an interface circuit of a chip. When receiving information, the device inputs the information to the interface circuit of the chip.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be disposed in a network device or a terminal device. Certainly, the processor and the storage medium may alternatively exist as discrete components in a network device or a terminal device.

All or a part of the foregoing embodiments may be implemented by using software, hardware, firmware, or any combination thereof. When software is used to implement embodiments, all or a part of embodiments may be implemented in a form of computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

**Claims**

1. A reference signal transmission method, wherein the method comprises:

   receiving configuration information, wherein the configuration information comprises a first configuration parameter;
   determining, based on the first configuration parameter, to use a first hopping mode, wherein the first hopping mode is one or more of the following: group hopping, sequence hopping, cyclic shift hopping, frequency hopping, and time hopping; and
   sending a reference signal in the first hopping mode.

2. The method according to claim 1, wherein the determining, based on the first configuration parameter, to use a first hopping mode comprises:
   determining, based on a value of the first configuration parameter, to use the first hopping mode.

3. The method according to claim 1, wherein the determining, based on the first configuration parameter, to use a first hopping mode comprises:

   when a value of the first configuration parameter is a first value, determining to use the first hopping mode, wherein the first hopping mode is one or more of the following: the cyclic shift hopping, the frequency hopping, and the time hopping; or

when a value of the first configuration parameter is a second value, determining to use the first hopping mode, wherein the first hopping mode is the group hopping and/or the sequence hopping.

4. The method according to claim 1, wherein the first hopping mode is one or more of the following: the cyclic shift hopping, the frequency hopping, and the time hopping; and the configuration information further comprises a second configuration parameter; and

the method further comprises:

determining, based on a value of the second configuration parameter, to use a second hopping mode, wherein the second hopping mode is the group hopping and/or the sequence hopping.

5. The method according to claim 4, wherein the sending a reference signal in the first hopping mode comprises: sending the reference signal in the first hopping mode and the second hopping mode.

6. The method according to claim 1, wherein the configuration information further comprises a first initial value parameter and a second initial value parameter; the first initial value parameter is used in the first hopping mode, and the second initial value parameter is used in a second hopping mode; the first hopping mode is one or more of the following: the cyclic shift hopping, the frequency hopping, and the time hopping; the second hopping mode is the group hopping and/or the sequence hopping; and the first initial value parameter is different from the second initial value parameter.

7. The method according to claim 6, wherein the first initial value parameter is associated with a coordinated set identifier, and the coordinated set identifier is associated with one or more downlink reference signal resources.

8. The method according to claim 6, wherein the sending a reference signal in the first hopping mode comprises:

determining an initial value of the first hopping mode based on the first initial value parameter;
determining a hopping parameter of the first hopping mode based on the initial value of the first hopping mode; and
sending the reference signal based on the hopping parameter of the first hopping mode.

9. The method according to claim 1, wherein when the first hopping mode is one or more of the following: the cyclic shift hopping, the frequency hopping, and the time hopping, the configuration information further comprises a second initial value parameter; and

the sending a reference signal in the first hopping mode comprises:

if the configuration information further comprises a first initial value parameter, determining an initial value of the first hopping mode based on the first initial value parameter; and/or
if the configuration information does not comprise the first initial value parameter, determining the initial value of the first hopping mode based on the second initial value parameter, wherein
the first initial value parameter is used in the first hopping mode, the second initial value parameter is used in a second hopping mode and/or the first hopping mode, and the second hopping mode is the group hopping and/or the sequence hopping.

10. The method according to claim 1, wherein the method further comprises:

determining a first hopping parameter based on the first configuration parameter, wherein the first hopping parameter is one or more of the following: a group hopping parameter, a sequence hopping parameter, a cyclic shift hopping parameter, a frequency hopping parameter, and a time hopping parameter; and
the sending a reference signal in the first hopping mode comprises:
sending the reference signal in the first hopping mode based on the first hopping parameter.

11. The method according to claim 10, wherein the first hopping parameter is one or more of the following: the cyclic shift hopping parameter, the frequency hopping parameter, and the time hopping parameter; and the configuration information further comprises a second configuration parameter; and

the method further comprises:

determining a second hopping parameter based on the second configuration parameter, wherein the second hopping parameter is the group hopping parameter and/or the sequence hopping parameter; and the second hopping parameter is used in a second hopping mode, and the second hopping mode is the group hopping and/or the sequence hopping.

12. The method according to claim 1, wherein the method further comprises:

determining a first hopping parameter based on the first configuration parameter and a first formula, wherein the first hopping parameter is one or more of the following: a group hopping parameter, a sequence hopping parameter, a cyclic shift hopping parameter, a frequency hopping parameter, and a time hopping parameter; and
the sending a reference signal in the first hopping mode comprises:
sending the reference signal in the first hopping mode based on the first hopping parameter.

13. A reference signal transmission method, wherein the method comprises:

receiving configuration information;
if the configuration information comprises a first configuration parameter, determining to use a first hopping mode, and sending a reference signal in the first hopping mode; and/or
if the configuration information does not comprise the first configuration parameter, determining not to use the first hopping mode, wherein
the first hopping mode is one or more of the following: group hopping, sequence hopping, cyclic shift hopping, frequency hopping, and time hopping.

14. The method according to claim 13, wherein the method further comprises:

if the configuration information comprises the first configuration parameter, determining a first hopping parameter according to a first formula; and
the sending a reference signal in the first hopping mode comprises:
sending the reference signal in the first hopping mode based on the first hopping parameter.

15. The method according to claim 14, wherein the method further comprises:

if the configuration information does not comprise the first configuration parameter, determining the hopping parameter according to a second formula; and
sending the reference signal based on the hopping parameter.

16. A reference signal transmission method, wherein the method comprises:

receiving configuration information;
if the configuration information comprises a first configuration parameter, determining to use a first hopping mode, and sending a reference signal in the first hopping mode, wherein the first hopping mode is one or more of the following: cyclic shift hopping, frequency hopping, and time hopping; and/or
if the configuration information does not comprise the first configuration parameter, determining to use a second hopping mode, and sending the reference signal in the second hopping mode, wherein the second hopping mode is group hopping and/or sequence hopping.

17. The method according to claim 16, wherein the method further comprises:

if the configuration information comprises the first configuration parameter, determining a first hopping parameter according to a third formula, wherein the first hopping parameter is used in the first hopping mode; and/or
if the configuration information does not comprise the first configuration parameter, determining a second hopping parameter according to a fourth formula, wherein the second hopping parameter is used in the second hopping mode.

18. A reference signal transmission method, wherein the method comprises:
sending configuration information, wherein the configuration comprises a first configuration parameter, the first configuration parameter is used to determine to use a first hopping mode, and the first hopping mode is one or more of the following: group hopping, sequence hopping, cyclic shift hopping, frequency hopping, and time hopping.

19. A reference signal transmission method, wherein the method comprises:

sending configuration information, wherein the configuration comprises or does not comprise a first configuration parameter; and

if the configuration information comprises the first configuration parameter, determining to use a first hopping mode; and/or

if the configuration information does not comprise the first configuration parameter, determining not to use the first hopping mode, wherein

the first hopping mode is one or more of the following: group hopping, sequence hopping, cyclic shift hopping, frequency hopping, and time hopping.

20. A reference signal transmission method, wherein the method comprises:

sending configuration information, wherein the configuration comprises or does not comprise a first configuration parameter; and

if the configuration information comprises the first configuration parameter, determining to use a first hopping mode, wherein the first hopping mode is one or more of the following: cyclic shift hopping, frequency hopping, and time hopping; and/or

if the configuration information does not comprise the first configuration parameter, determining to use a second hopping mode, wherein the second hopping mode is group hopping and/or sequence hopping.

21. A communication apparatus, comprising a module configured to perform the method according to any one of claims 1 to 17, or a module configured to perform the method according to any one of claims 18 to 20.

22. A communication apparatus, comprising a processor, wherein the processor is configured to perform the method according to any one of claims 1 to 17, or the method according to any one of claims 18 to 20.

23. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 17 or the method according to any one of claims 18 to 20 by using a logic circuit or by executing code instructions.

24. A computer-readable storage medium, wherein the storage medium stores a computer program or instructions, and when the computer program or the instructions is/are executed by a communication apparatus, the method according to any one of claims 1 to 17 or the method according to any one of claims 18 to 20 is implemented.

FIG. 1A

FIG. 1B

FIG. 1C

20

FIG. 2

```
┌─────────────────┐                    ┌─────────────────┐
│ Terminal device │                    │ Network device  │
└────────┬────────┘                    └────────┬────────┘
         │   S301: Configuration information     │
         │      (first configuration parameter)  │
         │◄──────────────────────────────────────┤
         │                                        │
  ┌──────┴──────────────────────┐                 │
  │  S302: Determine, based on the                │
  │  first configuration parameter, to            │
  │  use a first hopping mode    │                 │
  └──────┬──────────────────────┘                 │
         │                                        │
  ┌──────┴──────────────────────┐                 │
  │  S303: Generate a reference signal            │
  │  in the first hopping mode   │                 │
  └──────┬──────────────────────┘                 │
         │   S304: Reference signal               │
         ├───────────────────────────────────────►│
         │                                        │
```

FIG. 3

```
                        ┌─────────────────┐          ┌─────────────────┐
                        │ Terminal device │          │ Network device  │
                        └────────┬────────┘          └────────┬────────┘
                                 │  S401: Configuration information    │
                                 │◄───────────────────────────────────┤
                                 │                                     │
                 ┌───────────────┴────────────────┐                    │
                 ▼                                ▼                    │
  ┌──────────────────────────────┐  ┌──────────────────────────────┐   │
  │ S402: If the configuration    │  │ S403: If the configuration   │   │
  │ information includes a first  │  │ information does not include  │   │
  │ configuration parameter,      │  │ the first configuration       │   │
  │ determine to use a first      │  │ parameter, determine not to   │   │
  │ hopping mode, and send a      │  │ use the first hopping mode    │   │
  │ reference signal in the first │  │                               │   │
  │ hopping mode                  │  │                               │   │
  └──────────────────────────────┘  └──────────────────────────────┘   │
```

FIG. 4

Terminal device

Network device

S501: Configuration information

S502: If the configuration information includes a first configuration parameter, determine to use a first hopping mode, and send a reference signal in the first hopping mode

S503: If the configuration information does not include the first configuration parameter, determine to use a second hopping mode, and send the reference signal in the second hopping mode

FIG. 5

FIG. 6

EP 4 561 151 A1

Communication apparatus 700

Communication unit — 701

Processing unit — 702

FIG. 7

Communication apparatus 800

Processor 801

Interface circuit 802

Memory 803

FIG. 8

## INTERNATIONAL SEARCH REPORT

| International application No. |
| --- |
| **PCT/CN2023/110375** |

**A. CLASSIFICATION OF SUBJECT MATTER**

H04W24/02(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; EPTXT; USTXT; VEN; WOTXT; 3GPP: 参考信号, 跳变, 跳频, 配置, 组, 序列, 循环移位, 频域, 时域, 初始值, RS, hopping, frequency, group, cyclic shift, mode, type

**C. DOCUMENTS CONSIDERED TO BE RELEVANT**

| Category* | Citation of document, with indication, where appropriate, of the relevant passages | Relevant to claim No. |
| --- | --- | --- |
| X | CN 108631976 A (HUAWEI TECHNOLOGIES CO., LTD.) 09 October 2018 (2018-10-09) description, paragraphs [0127]-[0535] | 1-24 |
| X | CN 102215057 A (HUAWEI TECHNOLOGIES CO., LTD.) 12 October 2011 (2011-10-12) description, paragraphs [0040]-[0156] | 1-24 |
| A | CN 108112076 A (ZTE CORP.) 01 June 2018 (2018-06-01) entire document | 1-24 |
| A | US 2021036825 A1 (LG ELECTRONICS INC.) 04 February 2021 (2021-02-04) entire document | 1-24 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 November 2023** | **10 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 561 151 A1

## INTERNATIONAL SEARCH REPORT
### Information on patent family members

International application No.

**PCT/CN2023/110375**

| Patent document cited in search report | | | Publication date (day/month/year) | Patent family member(s) | | | Publication date (day/month/year) |
|---|---|---|---|---|---|---|---|
| CN | 108631976 | A | 09 October 2018 | WO | 2018171754 | A1 | 27 September 2018 |
| | | | | EP | 3592069 | A1 | 08 January 2020 |
| | | | | EP | 3592069 | A4 | 12 August 2020 |
| | | | | EP | 3592069 | B1 | 01 June 2022 |
| | | | | US | 2020022127 | A1 | 16 January 2020 |
| | | | | US | 11064465 | B2 | 13 July 2021 |
| | | | | US | 2021377929 | A1 | 02 December 2021 |
| | | | | US | 11765725 | B2 | 19 September 2023 |
| CN | 102215057 | A | 12 October 2011 | WO | 2011120433 | A1 | 06 October 2011 |
| | | | | US | 2013022082 | A1 | 24 January 2013 |
| | | | | US | 8787491 | B2 | 22 July 2014 |
| | | | | EP | 2555439 | A1 | 06 February 2013 |
| | | | | EP | 2555439 | A4 | 05 June 2013 |
| | | | | EP | 2555439 | B1 | 16 September 2015 |
| CN | 108112076 | A | 01 June 2018 | WO | 2018202215 | A1 | 08 November 2018 |
| | | | | US | 2020107304 | A1 | 02 April 2020 |
| | | | | US | 11711812 | B2 | 25 July 2023 |
| US | 2021036825 | A1 | 04 February 2021 | US | 11362788 | B2 | 14 June 2022 |
| | | | | WO | 2019147045 | A1 | 01 August 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210968766